# EUROPÄISCHE PATENTSCHRIFT

(11) **EP 2 585 314 B1**
(45) Veröffentlichungstag und Bekanntmachung des Hinweises auf die Patenterteilung: **28.02.2018**
(21) Anmeldenummer: 11727928.1
(22) Anmeldetag: 24.06.2011
(51) Int. Cl.: B44C 1/17, B44F 1/10

(54) **VERFAHREN ZUR DEKORATION VON OBERFLÄCHEN**
METHOD FOR DECORATING SURFACES
PROCÉDÉ DE DÉCORATION DE SURFACES

(30) Priorität: 20.10.2010 DE 102010048817; 28.06.2010 DE 102010025278
(43) Veröffentlichungstag der Anmeldung: 01.05.2013
(60) Teilanmeldung: 18151556.0
(73) Patentinhaber: Leonhard Kurz Stiftung & Co. KG, 90763 Fürth (DE)
(72) Erfinder: LUTZ, Norbert, 90607 Rückersdorf (DE); KURZ, Walter, 90768 Fürth (DE); BREHM, Ludwig, 91325 Adelsdorf (DE); BEZOLD, Hans Peter, 92237 Sulzbach-Rosenberg (DE)
(74) Vertreter: Wagner, Jürgen
(86) Internationale Anmeldenummer: PCT/EP2011/003126
(87) Internationale Veröffentlichungsnummer: WO 2012/000631

(56) Entgegenhaltungen:
- EP-A1- 1 241 618
- EP-A1- 1 264 704
- WO-A1-2004/041546
- DE-A1- 10 241 803
- DE-C1- 4 433 858
- DE-U1- 29 807 638

## Beschreibung

Die Erfindung betrifft ein Verfahren zur Dekoration von Oberflächen, insbesondere zur Dekoration von Umverpackungen.

Es ist bekannt Umverpackungen, beispielsweise Umverpackung von Lebensmitteln, mit einer maschinenlesbaren optischen Markierung, insbesondere einem Barcode zu versehen. Diese maschinenlesbare optische Markierung wird üblicherweise auf die Umverpackung mittels Offset-Druck zusammen mit einem umgebenden Dekor aufgedruckt, welches das dekorative Erscheinungsbild der Umverpackung bestimmt. Aufgrund der eingesetzten, auf hohe Stückzahlen optimierten Druckverfahren ist es hierbei nicht möglich, die optische maschinenlesbare Markierung verpackungsindividuell zu wählen. Die optische maschinenlesbare Markierung ist - wie auch das Dekor - bei allen gefertigten Umverpackungen identisch und enthält produktspezifische Informationen, nicht jedoch packungsspezifische Informationen.

Das Dokument DE 298 07 638 U1 beschreibt die Kennzeichnung von Sicherheitsmerkmalen auf Prägefolien. Hierbei weist die Prägefolie ein Sicherheitselement auf, das mit einer individualisierenden Kennzeichnung versehen ist. Dieses Dokument offenbart ein Verfahren gemäß dem Oberbegriff der Ansprüche 1 und 2. Der Erfindung liegt nunmehr die Aufgabe zugrunde, eine verbesserte Dekoration von Oberflächen zu ermöglichen, welche weiter auch ermöglicht, eine individualisierte maschinenlesbare optische Markierung auf die zu dekorierende Oberfläche aufzubringen.

Diese Aufgabe wird von einem Verfahren zur Dekoration von Oberflächen, insbesondere zur Dekoration von Umverpackungen, nach Anspruch 1 gelöst. Diese Aufgabe wird weiter von einem Verfahren zur Dekoration von Oberflächen, insbesondere zur Dekoration von Umverpackungen, nach Anspruch 2 gelöst.

Durch die Erfindung wird es ermöglicht, eine zu dekorierende Oberfläche, beispielsweise eine Umverpackung oder ein Substratblatt, in nur einem einzigen Arbeitsschritt sowohl mit einem sehr hochwertigen und optisch ansprechenden Dekor und einer individualisierten maschinenlesbaren optischen Markierung zu versehen. Dies hat gegenüber dem Ansatz, komplex und damit kostengünstig bisher nur mittels großindustrieller Prozesse herstellbare Dekore einerseits und individualisierende Kennzeichnungen andererseits in zwei getrennten Bearbeitungsschritten und in getrennten Bearbeitungsstationen auf eine Verpackung oder ein Substratblatt aufzubringen, nun den Vorteil, dass der Produktionsprozess vereinfacht und die Ausschussrate verringert wird, sodass die Produktion verbilligt wird. Dadurch dass ein und dasselbe Transferband sowohl für die Aufbringung einer individualisierten Markierung als auch des optisch variablen Dekorelements eingesetzt wird, ergeben sich weitere Kostenvorteile im Produktionsprozess. Weiter wird es so ermöglicht, die individualisierte maschinenlesbare optische Markierung stets registergenau relativ zu einem optisch variablen Dekor zu positionieren und damit zu vermeiden, dass das auf die Oberfläche aufgebrachte optisch variable Dekorelement die Auslesung der maschinenlesbaren optischen Markierung auf unvorhersehbarer Art und Weise stört.

Die zu dekorierende Oberfläche, beispielsweise ein Trägermaterial einer Verpackung oder eines Substratblattes, kann zusätzlich weitere Dekorbestandteile aufweisen, die vor und/oder nach der Applikation des optisch variablen Dekorelements und der maschinenlesbaren optischen Markierung aufgebracht, insbesondere aufgedruckt werden. Die zu dekorierende Oberfläche kann opake und/oder transluzente und/oder transparente Flächenbereiche oder auch Durchbrüche aufweisen, wobei das optisch variable Dekorelement und/oder die maschinenlesbare optische Markierung auf der Vorderseite und/oder auf der Rückseite der zu dekorierenden Oberfläche vorgesehen sein kann. Beispielsweise kann die zu dekorierende Oberfläche eine opake Schicht aus Papier oder Pappe aufweisen, in welche ein oder mehrere Fenster oder Durchbrüche ausgespart, insbesondere ausgestanzt sind und wobei die ein oder mehreren Fenster oder Durchbrüche mit einer transparenten oder transluzenten Folie zumindest auf einer Seite der zu dekorierenden Oberfläche verschlossen sind. Die Fenster oder Durchbrüche in der zu dekorierenden Oberfläche können so ausgestaltet sein, dass die zu dekorierende Oberfläche aus einem mehrschichtigen Schichtengebilde besteht, bei dem eine oder mehrere, insbesondere opake, Schichten zur Bildung eines Fensters nicht vorhanden, insbesondere ausgespart, vorzugsweise ausgestanzt sind und eine oder mehrere weitere, insbesondere transparente Schichten nicht ausgespart sind und dadurch das in den anderen Schicht vorgesehene Fenster verschließen. Alternativ dazu können die die zu dekorierende Oberfläche bildenden Schichten alle vollständig durchtrennt sein, wodurch ein offenes Fenster gebildet wird. Das optisch variable Dekorelement und/oder die maschinenlesbare optische Markierung kann dabei den opaken und/oder transluzenten und/oder transparenten Flächenbereichen jeweils lagegenau zugeordnet sein oder aber mit diesen Flächenbereichen jeweils nur teilweise überlappen. Das optisch variable Dekorelement kann entweder auf einer zusätzlichen, das Fenster verschließenden, insbesondere transparenten Schicht angeordnet sein oder als selbsttragendes, insbesondere in Flächenanteilen partiell transparentes, Dekorelement selbst das Fenster verschließen. Beispielsweise kann das Aufbringen auf der Rückseite der zu dekorierenden Oberfläche in den transluzenten und/oder transparenten Flächenbereichen im Konterdruck, d.h. spiegelverkehrt erfolgen, damit das optisch variable Dekorelement und die maschinenlesbare optische Markierung von der Vorderseite seitenrichtig erkennbar sind. Die zu dekorierende Oberfläche kann dabei als Schutzschicht für die auf der Rückseite angeordneten Dekorelemente, Markierungen oder Dekorbestandteile dienen.

Es wird hierdurch die vorteilhafte Möglichkeit eröffnet, das Transferband mit dem optisch variablen Dekorelement insbesondere großtechnisch an einem Produktionsstandort herzustellen und anschließend an einem anderen Produktionsstandort in das Transferband nachträglich die individualisierte maschinenlesbare optische Markierung einzubringen. An diesem anderen Produktionsstandort kann anschließend das optisch variable Dekorelement und das individualisierte maschinenlesbare optische Markierung auf das Trägermaterial aufgebracht werden. Alternativ besteht natürlich auch die Möglichkeit, beide Komponenten, also das optisch variable Dekorelement und das individualisierte maschinenlesbare optische Markierung an ein und demselben Produktionsstandort auf das Transferband aufzubringen.

Vorteilhafte Ausgestaltungen der Erfindung sind in den Unteransprüchen bezeichnet.

Gemäß einem bevorzugten Ausführungsbeispiel der Erfindung wird die der Ablöseschicht entgegengesetzte Oberfläche der Dekorlage im zweiten Flächenbereich vollflächig mit einer Kleberschicht versehen. Dies erfolgt vorzugsweise mittels Siebdruck oder Tiefdruck. Hierbei ist es auch möglich, dass die Kleberschicht nicht nur in den zweiten Flächenbereich auf das Transferband aufgedruckt wird, sondern dass das Transferband sowohl in den ersten als auch in den zweiten Flächenbereichen oder auch in weiteren Flächenbereichen mit der Kleberschicht bedruckt wird, auch vollflächig mit der Kleberschicht bedruckt wird. Zur Individualisierung wird auf die Kleberschicht im zweiten Flächenbereich eine musterförmige Deaktivierungsschicht aufgebracht. Die Formgebung der Deaktivierungsschicht entspricht hierbei der Formgebung der individualisierten maschinenlesbaren optischen Markierung in Negativform. Beim Transferieren des Transferbandes wird das Transferband im zweiten Flächenbereich mittels eines Prägewerkzeugs gegen die zu dekorierende Oberfläche gepresst. In den Teilbereichen, in denen die musterförmige Deaktivierungsschicht nicht zwischen der Kleberschicht und der zu dekorierenden Oberfläche angeordnet ist, verbleiben die individualisierbaren Schichten beim Abziehen auf der zu dekorierenden Oberfläche. In den übrigen Teilbereichen des zweiten Flächenbereichs, in denen die Deaktivierungsschicht vorgesehen ist, verbleiben die individualisierbaren Schichten auf dem Transferband, sodass beim Abziehen des Transferbands von der zu dekorierenden Oberfläche diese Teilbereich von den auf der zu dekorierenden Oberfläche verbleibenden Teilbereiche getrennt werden.

Als Deaktivierungsschicht wird hierbei eine Schicht aus einem Material verwendet, welches ein Anhaften des gegen die zu dekorierende Oberfläche gepressten Transferbands auf der zu dekorierenden Oberfläche verhindert oder nach dem Anpressen zumindest eine Haftkraft aufweist, die geringer ist als die Bruchkraft der Dekorlage zwischen den Flächenbereichen mit aufgebrachter Deaktivierungsschicht und den Flächenbereichen ohne Deaktivierungsschicht.

Es hat sich hierbei bewährt, als Deaktivierungsschicht eine Schicht zu verwenden, welche insbesondere strahlungshärtbare Silikonacrylate enthält.

Die Schichtdicke der Deaktivierungsschicht beträgt in diesem Fall vorzugsweise zwischen 0,1 µm und 2 µm, weiter bevorzugt zwischen 0,2 µm und 0,5 µm.

Alternativ oder zusätzlich zu Silikonacrylaten können andere strahlungshärtbare oder strahlungsvernetzbare Lackbestandteile mit niedriger Oberflächenspannung im ausgehärteten Zustand vorgesehen sein. Diese Lackbestandteile sollen im ausgehärteten oder weitgehend vollständig vernetzten Zustand keine thermoplastischen Eigenschaften mehr aufweisen, um beim Anpressen des Transferbandes mittels Prägewerkzeug unter Einwirkung von Wärme keine klebenden oder haftenden Eigenschaften mehr aufweisen zu können und dadurch die klebenden oder haftenden Eigenschaften der Kleberschicht wirksam deaktivieren zu können.

Weiter hat es sich auch bewährt, als Deaktivierungsschicht eine stark pigmentierte Lackschicht zu verwenden. Diese Lackschicht weist im getrockneten Zustand vorzugsweise einen Pigmentanteil von mehr als 30 Gewichtsprozent, weiter bevorzugt von 50 Gewichtsprozent auf.

Die Deaktivierungsschicht wird vorzugsweise mittels eines Tintenstrahldruckers oder eines Laserdruckers auf das Transferband aufgedruckt. Weiter ist es auch möglich, dass die Deaktivierungsschicht mittels eines Thermotransferdruckkopfes musterförmig von einer Transferfolie auf das Transferband aufgebracht wird.

Gemäß eines weiteren bevorzugten Ausführungsbeispiels der Erfindung wird auf die der Ablöseschicht entgegengesetzte Oberfläche der Dekorlage im zweiten Flächenbereich vollflächig ein strahlenaktivierbarer oder strahlendeaktivierbarer Kleber aufgebracht und so diese Oberfläche mit einer entsprechenden strahlenaktivierbaren oder strahlendeaktivierbaren Kleberschicht versehen.

Unter strahlenaktivierbarer Kleberschicht wird hierbei eine Kleberschicht verstanden, welche erst nach entsprechender Bestrahlung mit energiereicher Strahlung, vorzugsweise UV-Strahlung und gegebenenfalls nach weiteren Kriterien (Temperatur, Druck) eine Klebkraft zwischen den angrenzenden Oberflächen entwickelt. Es kann sich bei einem strahlenaktivierbaren Kleber beispielsweise um einen UV-aktivierbaren Kleber handeln, der bei Bestrahlung mittels UV-Licht vernetzt und so die angrenzenden Oberflächen miteinander verklebt. Es kann sich bei dem strahlenaktivierbaren Kleber jedoch auch um ein durch Hitze oder Druck aktivierbaren Kleber handeln, bei dem die Aktivierbarkeit durch Hitze oder Druck eine vorausgehende Bestrahlung, beispielsweise mittels UV-Licht voraussetzt. Es kann sich bei dem Kleber jedoch auch um einen sogenannten Dualcure-Kleber handeln, der mittels Hitze, Druck und gleichzeitiger und/oder zeitlich vor- und/oder nachgeordneter Einwirkung von energiereicher Strahlung aktiviert werden kann.

Unter strahlendeaktivierbaren Kleber handelt es sich um einen Kleber, der nach entsprechender Bestrahlung seine Klebekraft verliert.

Zur Individualisierung wird die Kleberschicht im zweiten Flächenbereich musterförmig mit einer zur Aktivierung beziehungsweise Deaktivierung der Kleberschicht geeigneten Strahlenquelle musterförmig bestrahlt. Die Formgebung der bestrahlten Bereiche entspricht der Formgebung der individualisierbaren maschinenlesbaren optischen Markierung oder der Formgebung der individualisierbaren maschinenlesbaren optischen Markierung in Negativform. Beim Transferieren wird das Transferband im zweiten Flächenbereich mittels eines Prägewerkzeugs gegen die zu dekorierende Oberfläche gepresst. In den Teilbereichen, in denen die Kleberschicht aktiviert beziehungsweise nicht deaktiviert ist, verbleiben die individualisierbaren Schichten beim Abziehen auf der zu dekorierenden Oberfläche. In den übrigen Teilbereichen des zweiten Flächenbereichs verbleiben die individualisierbaren Schichten auf dem Transferband und werden beim Abziehen von den auf der zu dekorierenden Oberfläche verbleibenden Teilbereichen getrennt.

So ist es beispielsweise möglich, dass als Kleberschicht ein strahlenvernetzbarer Kleber eingesetzt wird und die Kleberschicht musterförmig in Positivform bestrahlt wird, während das Transferband im zweiten Flächenbereich mittels des Prägewerkzeugs gegen die zu dekorierende Oberfläche gepresst wird. In den bestrahlten Bereichen vernetzt die Kleberschicht und die darüberliegenden Teilbereiche der Dekorlage haften damit an der zu dekorierenden Oberfläche an. Weiter ist es auch möglich, dass eine strahlenhärtbare Kleberschicht auf die zweiten Flächenbereiche aufgebracht wird und vor dem Aufpressen des Transferbandes mittels des Prägewerkzeugs in Negativform bestrahlt wird. In den bestrahlten Bereichen härtet die Kleberschicht aus und kann damit im Weiteren nicht mehr zur Vermittlung einer Klebkraft zwischen zwei Oberflächen aktiviert werden. Anschließend wird das Transferband in den zweiten Flächenbereichen mit dem Prägewerkzeug gegen die zu dekorierende Oberfläche gepresst und hierbei die Kleberschicht noch mal zur Entwicklung einer Klebkraft auch vollflächig belichtet, wobei dann die Dekorlage in den Bereichen an der zu dekorierenden Oberfläche anhaftet, in denen die Kleberschicht noch aktivierbar ist und nicht bereits durch die Vorbelichtung ausgehärtet ist.

Gemäß eines nicht erfindungsgemäßen Ausführungsbeispiels wird die der Ablöseschicht entgegengesetzte Oberfläche der Dekorlage im zweiten Flächenbereich vollflächig mit einer Kleberschicht versehen, wie dies bereits oben ausgeführt ist. Im zweiten Flächenbereich wird als Ablöseschicht eine strahlenvernetzbare Ablöseschicht vorgesehen. Es ist hierbei auch möglich, dass die Ablöseschicht nicht nur im zweiten Flächenbereich strahlenvernetzbar ist, sondern dass es sich bei der Ablöseschicht des Transferbandes vollflächig um eine strahlenvernetzbare Ablöseschicht handelt. Zur Individualisierung der Ablöseschicht wird die Ablöseschicht im zweiten Flächenbereich musterförmig mit einer zur Vernetzung der Ablöseschicht geeigneten Strahlenquelle bestrahlt. Die Formgebung der bestrahlten Teilbereiche der Ablöseschicht entspricht der Formgebung der individualisierten maschinenlesbaren optischen Markierung in Negativform. Beim Transferieren wird das Transferband im zweiten Flächenbereich mittels eines Prägewerkzeugs gegen die zu dekorierende Oberfläche gepresst. In den Teilbereichen, in denen die Ablöseschicht nicht bestrahlt ist, verbleiben die individualisierbaren Schichten auf der zu dekorierenden Oberfläche. In diesem Bereich ist die durch die Kleberschicht vermittelte Haftkraft zwischen der Dekorlage und der zu dekorierenden Oberfläche größer als die durch Ablöseschicht vermittelte Haftkraft zwischen der Trägerfolie und der Dekorlage. In den übrigen Teilbereichen des zweiten Flächenbereichs, in denen die Ablöseschicht bestrahlt ist, verbleiben die individualisierbaren Schichten auf dem Transferband und werden so von den auf der zu dekorierenden Oberfläche verbleibenden Teilbereiche der Dekorlage getrennt. In diesem Bereich ist durch die Vernetzung der Ablöseschicht bedingt die durch die Ablöseschicht vermittelte Haftkraft zwischen der Trägerfolie und der Dekorlage höher als die durch die Kleberschicht vermittelte Haftkraft zwischen der Dekorlage und der zu dekorierenden Oberfläche. Die durch die Kleberschicht und die Ablöseschicht vermittelten Haftkräfte werden entsprechend eingestellt um die oben beschriebenen Bedingungen zu erfüllen.

Wie bereits oben ausgeführt, ist es mittels der oben angeführten Verfahren möglich, eine Vielzahl von unterschiedlichen Schichten als individualisierte Schicht einzusetzen.

Es ist besonders vorteilhaft, die Dekorlage in den zweiten Flächenbereichen so auszugestalten, dass sie ein oder mehrere der folgenden Schichten als individualisierbare Schicht umfasst: eine oder mehrere auch unterschiedlich eingefärbte Lackschichten, eine metallische Reflektionsschicht, eine Replizierschicht mit abgeformter Reliefstruktur, eine Volumenhologrammschicht, ein Dünnfilmschichtsystem, eine Schicht umfassend Flüssigkristalle, insbesondere cholesterische Flüssigkristalle, ein oder mehrere Lackschichten enthalten optisch variable Pigmente, beispielsweise Dünnfilmschichtpigmente oder metallische Pigmente, ein oder mehrere Lackschichten umfassende fluoreszierende, lumineszierende oder thermochrome Pigmente oder Kombinationen aus obigen Materialien und/oder Schichten.

Gemäß einem weiteren nicht erfindungsgemäßen Ausführungsbeispiel wird die der Ablöseschicht entgegengesetzte Oberfläche der Dekorlage im zweiten Flächenbereich vollflächig mit einer Kleberschicht versehen, wie bereits oben ausgeführt. Zur Individualisierung wird auf die Kleberschicht im zweiten Flächenbereich eine musterförmige Farbschicht aufgebracht. Die Formgebung der Farbschicht entspricht hierbei der Formgebung der individualisierten maschinenlesbaren optischen Markierung. Die Transparenz der individualisierbaren Schicht ist hierbei so gewählt, dass sie mindestens 20 % höher, bevorzugt mindestens 70 % höher als die Transparenz der Farbschicht gewählt wird. Vorzugsweise werden hierbei die individualisierbaren Schichten so gewählt, dass deren Gesamttransparenz höher als 75 %, weiter bevorzugt von 90 % ist und die Farbschicht so gewählt, dass deren Transparenz geringer als 25 %, bevorzugt geringer als 10 % ist. Die individualisierbare Schicht kann dabei Teilbereiche und/oder Teilschichten mit unterschiedlicher Transparenz oder Transluzenz aufweisen, die zusammen ein insbesondere musterförmiges Dekor bilden und gemeinsam eine o.g. Gesamttransparenz und dadurch im Vergleich zu der Farbschicht einen entsprechenden Kontrast aufweisen. Der entsprechende Kontrast kann dabei im Spektrum des für das menschliche Auge sichtbaren Lichts bei Normallicht vorhanden sein oder aber bei Beleuchtung mit Licht außerhalb des sichtbaren Spektrums, z.B. UV-Licht oder IR-Licht. Dafür können z.B. UV-fluoreszierende Farben verwendet werden, um einen entsprechenden Kontrast zu erzeugen. Beim Transferieren wird das Transferband im zweiten Flächenbereich mittels eines Prägewerkzeugs vollflächig gegen die zu dekorierende Oberfläche gepresst. Anschließend wird das Transferband von der zu dekorierenden Oberfläche abgezogen, wobei die Transferlage im zweiten Flächenbereich auf der zu dekorierenden Oberfläche verbleibt.

Vorzugsweise wird hierbei die Bruchkraft der individualisierbaren Schichten so gewählt, dass die individualisierbaren Schichten im zweiten Flächenbereich beim Abziehen des Transferbandes auf der zu dekorierenden Oberfläche verbleiben, trotz der unterschiedlichen Haftkräfte an der zu dekorierenden Oberfläche, in den mit der Farbschicht versehenen Teilbereichen des zweiten Flächenbereichs einerseits und den nicht mit der Farbschicht versehenen Teilbereichen des zweiten Flächenbereichs andererseits. Durch die entsprechende Einstellung der Bruchkraft der individualisierbaren Schichten - auch in Abhängigkeit von der Flächenausdehnung der aufgebrachten musterförmigen Farbschicht - wird sichergestellt, dass durch die Unterschiede in der Haftkraft zwischen diesen Teilbereichen keine Durchtrennung der individualisierbaren Schichten an den Grenzlinien zwischen diesen Teilbereichen erfolgt.

Weiter ist es auch möglich, als musterförmige Farbschicht eine eingefärbte Kleberschicht auf die Kleberschicht aufzubringen.

Die musterförmige Farbschicht wird hierbei bevorzugt mittels eines Tintenstrahldruckers, mittels eines Laserdruckers oder auch durch Transfer von einer Transferfolie mittels eines Thermotransferdruckkopfes auf das Transferband aufgebracht, wie bereits oben beschrieben. Die Farbschicht weist hierbei bevorzugt eine stark kontrastierende Farbe zu der Farbe der zu dekorierenden Oberfläche auf, wobei die Farbschicht bevorzugt in Schwarz oder in einer Primärfarbe wie Rot oder Grün oder Blau eingefärbt ist.

Die Schichtdicke der musterförmigen Farbschicht beträgt vorzugsweise zwischen 0,1 und 20 µm, bevorzugt zwischen 0,2 µm und 5 µm.

Die musterförmige Farbschicht oder als musterförmige Farbschicht verwendete eingefärbte Kleberschicht sollte vorzugsweise chemisch ähnlich zu der Kleberschicht sein, um eine gute chemische und physikalische Verträglichkeit zwischen beiden Schichten und eine gleichmäßige Haftung beider Schichten auf der zu dekorierenden Oberfläche und damit eine gute Beständigkeit der Dekoration gegenüber äußeren Einflüssen zu erreichen. Vorteilhaft ist es dabei, wenn sich die Kleberschicht und die darauf aufgebrachte Farbschicht oder eingefärbte Kleberschicht an ihren Grenzflächen zueinander leicht durchmischen. Diese Durchmischung kann in Tiefenrichtung und seitlich im Mikrometerbereich erfolgen und beeinflusst die Randschärfe bzw. Genauigkeit so gut wie nicht.

Bei den oben beschriebenen Verfahren wird weiter vorzugsweise auf die der Ablöseschicht entgegengesetzten Oberfläche der Dekorlage eine Kleberschicht vollflächig zumindest in den ersten Flächenbereichen, vorzugsweise zumindest in den ersten und zweiten Flächenbereichen insbesondere mittels Siebdruck oder Tiefdruck aufgebracht. Beim Transferieren wird das Transferband vorzugsweise in einem ersten Flächenbereich mittels einem der Formgebung des Dekorelements entsprechenden Prägewerkzeug gegen die zu dekorierende Oberfläche gepresst. Anschließend wird das Transferband von der zu dekorierenden Oberfläche abgezogen. Hierbei verbleibt das Dekorelement auf der zu dekorierenden Oberfläche. Die das Dekorelement umgebenden Bereiche der Dekorlage verbleiben wiederum auf dem Transferband und werden beim Abziehen von dem Dekorelement getrennt.

Als Kleberschicht und/oder als musterförmige Kleberschichten werden in den oben beschriebenen Verfahren bevorzugt durch Hitze und/oder Druck aktivierbare Kleberschichten verwendet. Als Prägewerkzeug wird hierbei vorzugsweise auch ein beheiztes Prägewerkzeug verwendet, sodass durch den von dem Prägewerkzeug vermittelten Druck und die durch das Prägewerkzeug vermittelte Hitze die Kleberschichten aktiviert werden und damit der Bereich, auf dem das Prägewerkzeug aufliegt, an der zu dekorierenden Oberfläche anhaftet.

Es hat sich bewährt, dass die ersten Flächenbereiche in einer konstanten Rasterweite voneinander beabstandet sind und dass jedem ersten Flächenbereich ein zweiter Flächenbereich zugeordnet ist, wobei die zweiten Flächenbereiche ebenfalls in einer konstanten Rasterweite voneinander beabstandet sind und in jeweils gleichartiger Lage zum jeweils zugeordneten ersten Flächenbereich auf dem Transferband angeordnet sind. Hierdurch wird ein registergenaues Aufbringen der Dekorelemente und der individualisierten maschinenlesbaren optischen Markierungen sowie eine effektive Ausnutzung der auf dem Transferband zur Verfügung stehenden Fläche gewährleistet.

Weiter hat es sich bewährt, dass die zweiten Flächenbereiche eine Abmessung zwischen 5 x 5 mm und 50 x 50 mm, bevorzugt zwischen 7 x 7 mm und 20 x 20 mm besitzen. Die ersten Flächenbereiche besitzen bevorzugt eine Abmessung zwischen 5 x 5 mm und 50 x 50 mm, weiter bevorzugt zwischen 10 x 10 mm und 30 x 30 mm.

Gemäß einer bevorzugten Variante der Erfindung überlappen sich die ersten und zweiten Flächenbereiche nicht. Bevorzugt ist hier der erste Flächenbereich von jedem zweiten Flächenbereich zumindest 0,5 mm beabstandet, vorzugsweise zumindest 1 mm, besonders bevorzugt zumindest 3 mm beabstandet. Dieser Abstand ist von den beim Transferieren bestehenden Prozesstoleranzen und auch von der Größe einer möglicherweise benötigten, die individualisierten maschinenlesbaren optischen Markierungen, insbesondere allseitig flächenmäßig umschließenden Ruhezone abhängig.

Hierbei hat es sich bewährt, dass beim Transferieren das Transferband mittels eines Prägewerkzeugs gegen die zu dekorierende Oberfläche gepresst wird, welches eine erste erhabene Prägefläche aufweist, deren Formgebung der Formgebung des Dekorelements entspricht, und eine zweite erhabene Prägefläche aufweist, deren Formgebung der Formgebung des zweiten Flächenbereichs entspricht. Das Transferband wird weiter bevorzugt vor der Transferierung mittels einer Registriervorrichtung derart in Bezug auf das Prägewerkzeug ausgerichtet, dass die erste Prägefläche im Bereich eines ersten Flächenbereichs auf das Transferband auftrifft und die zweite Prägefläche im Bereich eines weiteren Flächenbereichs auf das Transferband auftrifft. Hierzu ist auf dem Transferband vorzugsweise eine Abfolge von Registriermarken aufgebracht, welche mittels eines Sensors, insbesondere eines optischen Sensors, von der Registrierungsvorrichtung erfasst werden. Anhand der Lage der Registriermarken steuert die Registrierungsvorrichtung ein oder mehrere Transportvorrichtungen entsprechend an, sodass das Prägewerkzeug wie oben beschrieben auf das Transferband auftrifft.

Es ist möglich, dass die ersten Flächenbereiche in ihrer Formgebung exakt der Formgebung der Dekorelemente entsprechen. Es hat sich jedoch weiter bewährt, dass die ersten Flächenbereiche großflächiger als die Dekorelemente ausgeformt sind und die Dekorelemente in jede Richtung zumindest um 1 bis 5 mm, weiter bevorzugt um 1,5 mm überragen. Hierdurch können gegebenenfalls auftretenden Registerungenauigkeiten ausgeglichen werden. Falls die Ausformung der ersten Flächenbereiche exakt der Ausformung der Dekorelemente entspricht ist es weiter auch möglich, dass der Prägestempel geringfügig großflächiger als die Dekorelemente ausgeformt ist, um so ebenfalls gegebenenfalls auftretende Registerungenauigkeiten ausgleichen zu können.

Gemäß einem bevorzugten Ausführungsbeispiel der Erfindung unterscheidet sich die Dekorlage in den ersten Flächenbereichen einerseits und den zweiten Flächenbereichen andererseits. Insbesondere besitzt die Dekorlage in den ersten Flächenbereichen einerseits und in den zweiten Flächenbereichen andererseits eine unterschiedliche Abfolge von Schichten oder weist dort unterschiedliche Schichten auf. Hierdurch ist es möglich, dass sich der optische Eindruck der Dekorelemente von dem optischen Eindruck der individualisierten maschinenlesbaren optischen Markierung deutlich unterscheidet.

Beispielsweise kann die Dekorlage in den ersten Flächenbereichen eine Replizierschicht mit zumindest bereichsweise abgeformter Reliefstruktur sowie eine vorzugsweise opake oder weitgehend opake metallische Reflektionsschicht insbesondere benachbart zu der Replizierschicht aufweisen, wogegen in den zweiten Flächenbereichen die metallische Reflektionsschicht und/oder die Replizierschicht nicht vorhanden ist. Dabei kann die Dekorlage eine in den ersten und zweiten Flächenbereichen vollflächig aufgebrachte Ablöseschicht und/oder eine vollflächig aufgebrachte Kleberschicht aufweisen. In den zweiten Flächenbereichen ohne metallische Reflektionsschicht kann die Dekorlage transparent oder transluzent sein, wodurch z.B. eine auf die Kleberschicht in den zweiten Flächenbereichen aufgebrachte musterförmige Farbschicht mit ausreichendem Kontrast als individualisierte maschinenlesbare optische Markierung durch die Dekorlage hindurch erkennbar sein kann. Die in den zweiten Flächenbereichen nicht vorgesehene metallische Reflektionsschicht kann dort entweder nachträglich entfernt worden sein, beispielsweise mittels Ätzverfahren oder Waschverfahren, oder dieser Bereich beim Aufbringen der HRI-Schicht ausgespart worden sein, beispielsweise mittels einer Maske.

Gemäß eines weiteren bevorzugten Ausführungsbeispiels der Erfindung ist es auch möglich, dass die ersten und zweiten Flächenbereiche überlappend und/oder ineinander geschachtelt angeordnet sind. Beispielsweise können die ersten Flächenbereiche zumindest bereichsweise einen Rahmen für die zweiten Flächenbereiche bilden, wobei die zweiten Flächenbereiche ganz oder teilweise innerhalb des Rahmens angeordnet sind.

Die ersten und zweiten Flächenbereiche können jeweils eine Replizierschicht mit zumindest bereichsweise abgeformter Reliefstruktur und jeweils eine vorzugsweise semitransparente oder opake oder weitgehend opake, insbesondere metallische Reflexionsschicht insbesondere benachbart zu der Replizierschicht aufweisen.

Je nach eingesetztem Lesegerät kann es dazu insbesondere vorteilhaft sein, Reliefstrukturen zu verwenden, die nur unter bestimmten optischen Bedingungen (Beleuchtungsstärke, -richtung, -polarisation) sichtbar sind.

Es kann vorteilhaft sein, die Reflexionsschicht der individualisierten optischen Markierung lagegenau, d.h. im Register zu optisch variablen Reliefstrukturen auszubilden.

Weiter ist es vorteilhaft, wenn unterschiedlich ausgebildete Reliefstrukturen unterschiedliche Bestandteile der individualisierten optischen Markierung bilden und separat auslesbar sind. Beispielsweise unterscheiden sich diese Reliefstrukturen in ihren Strukturparametern wie Azimutwinkel, Spatialfrequenz, Strukturtiefe oder Korrelationslänge oder ihrer Reliefform (Sägezahn, Dreieck, Rechteck, Sinus, Halbkreis, Gaußsche Glockenform etc.). Je nach eingesetztem Lesegerät und/oder vorherrschenden Beleuchtungsbedingungen können Teile der individualisierten optischen Markierung insbesondere aufgrund der optischen Wirkung der Reliefstrukturen ausgelesen werden und andere Teile der individualisierten optischen Markierung bilden entweder dafür den Hintergrund oder die Umgebung und/oder können bei anderen Beleuchtungsbedingungen und/oder mit einem anderen Lesegerät ausgelesen werden. Beispielsweise ist es dadurch möglich, mit Hilfe der Reliefstrukturen eine individualisierte optische Markierung zu bilden, die zu einem Teil mit einem herkömmlichen Lesegerät, beispielsweise einer Kamera mit Bildverarbeitungseinrichtung ausgelesen werden kann. Innerhalb dieser individualisierten optischen Markierung ist zusätzlich eine weitere Information enthalten, die mit dem herkömmlichen Lesegerät nicht auslesbar ist und dabei auch nicht störend in Erscheinung tritt. Erst bei einem Wechsel der Beleuchtungsbedingungen und/oder des Lesegerätes kann diese zweite Information ausgelesen werden. Beispielsweise kann die Beleuchtungsstärke, - richtung oder -polarisation geändert werden und/oder entsprechende Änderungen am Lesegerät, z.B. Aufsetzen eines Polarisators, eines Farbfilters oder einer Zusatzoptik, vorgenommen werden.

Die Replizierschichten der ersten und/oder zweiten Flächenbereiche ist bevorzugt in den Bereichen, in welchen die ersten und zweiten Flächenbereichen aneinander angrenzen, als eine Ruhezone für die individualisierte optische Markierung ausgebildet sein, das heißt als eine Zone ohne optisch variable Effekte und ohne Muster, Markierungen, Dekorationen oder andere, den Auslesevorgang möglicherweise behindernden optischen Markierungen. Dafür ist es vorteilhaft, wenn die Replizierschicht in der Ruhezone entweder keine Reliefstrukturen oder stochastische Mattstrukturen oder Mottenaugenstrukturen aufweist, sodass das optische Erscheinungsbild in der Ruhezone möglichst gleichmäßig ist und keine störenden Muster, Markierungen oder Effekte aufweist. Zusätzlich ist es vorteilhaft, in dieser Ruhezone die Reflexionsschicht vollständig oder zu einem überwiegenden Teil zu entfernen, um einen möglichen optisch variablen Effekt zu unterdrücken. Alternativ kann ein Freiraum zwischen den ersten und zweiten Flächenbereichen vorgesehen sein, der als Ruhezone dienen kann und wodurch die ersten und zweiten Flächenbereiche voneinander beabstandet sind und nicht direkt aneinander angrenzen. In diesem Freiraum können die Replizierschicht und/oder die Reflexionsschicht und/oder weitere nicht vorhanden oder ausgespart sein.

Die Dekorlage kann in den Überlappungsbereichen der ersten und zweiten Flächenbereiche vorzugsweise eine vollflächige oder partielle HRI-Schicht aufweisen.

Die individualisierbare maschinenlesbare optische Markierung besteht vorzugsweise aus einem eindimensionalen oder zweidimensionalen Barcode, beispielsweise ausgebildet als Matrixcode, z.B. Azteccode, QR-Code (QR = Quick Response), Composite Code (kombinierte Codes unterschiedlicher Art), Farbbarcode. Die einen oder mehreren individualisierbaren Schichten werden damit - wie oben beschrieben - in Form eines eindimensionalen oder zweidimensionalen Barcodes individualisiert. Es ist jedoch auch möglich, dass als maschinenlesbare optische Markierung auch Zahlen- und/oder Buchstabenfolgen verwendet werden.

Ein zweidimensionaler Barcode besteht aus sogenannten Modulen, d.h. einzelnen Datenpunkten oder Pixeln, die in zweidimensionaler Ausdehnung (Fläche) angeordnet sind und zusammen Daten in grafisch verschlüsselter Form darstellen. Eine bevorzugte und mit internationalen Normen harmonierende Anzahl von Modulen eines zweidimensionalen Barcodes (Data Matrix Code ECC200) liegen im Bereich von 10 x 10 Modulen (= 100 Module) bis 144 x 144 Modulen (= 20736 Module) an. In der maximalen Modulanzahl 144 x 144 lassen sich bis zu 3116 Zahlen oder 2335 ASCII-Zeichen, insgesamt 1558 Bytes, unterbringen. Ein zweidimensionaler Barcode soll mindestens 10 x 10 Module enthalten. Ein QR-Code enthält zwischen 21 x 21 und 177 x 177 Module. Zusätzlich enthält ein QR-Code spezielle Funktions-Muster zur Ausrichtung und Positionierung des Lesegeräts. Die Module enthalten die Daten in redundanter Form, sodass die verschlüsselten Daten auch dann noch entschlüsselt werden können, wenn ein Teil des Codes unleserlich, z.B. zerstört oder überdeckt ist. Ein QR-Code kann zusätzlich zu den Modulen und den Funktions-Mustern noch weitere grafische, insbesondere unverschlüsselte oder auf andere Weise verschlüsselte Motive, beispielsweise Buchstaben, Ziffern, Symbole, Logos, ein Halbtonbild, ein mehrfarbiges, insbesondere mit digitalem Wasserzeichen versehenen Bild, einen Strichcode, einen Zahlencode etc. enthalten, wobei diese grafischen Motive innerhalb des Flächenbereichs des QR-Codes angeordnet sein können. Beispielsweise kann ein Logo etwa mittig in dem QR-Code vorgesehen sein, wobei Module und Funktions-Muster das Logo vorzugsweise allseitig umschließen. Die Flächenausdehnung eines zweidimensionalen Barcodes richtet sich nach der Anzahl der Module und der Flächenausdehnung eines einzelnen Moduls. Die Flächenausdehnung eines einzelnen Moduls richtet sich wiederum nach dem Auflösungsvermögen bzw. den Lesefähigkeiten der eingesetzten Lese- oder Entschlüsselungsgeräte. Dies können beispielsweise spezielle Barcodescanner sein, aber auch Mobiltelefone oder andere insbesondere mobile elektronische Geräte, die mit einer Kamera und vorzugsweise einer Netzwerkverbindung und/oder einer Entschlüsselungssoftware für Barcodes ausgerüstet sind. In der Praxis hat es sich bewährt, wenn ein einzelnes Modul eine kleinste Ausdehnung in einer Richtung von 0,1 mm bis 1 mm aufweist, bevorzugt von 0,3 mm bis 0,75 mm. Diese Modulgröße ist von den meisten Lese- oder Entschlüsselungsgeräten innerhalb erlaubter Toleranzen detektierbar. Bei einer Modulgröße von 0,5 mm und einer Modulanzahl von 21 x 21 ergibt sich eine Flächenausdehnung des zweidimensionalen Barcodes von 10,5 x 10,5 mm. Bei einer Modulgröße von 0,75 mm und einer Modulanzahl von 12 x 12 ergibt sich eine Flächenausdehnung des zweidimensionalen Barcodes von 9 x 9 mm. Mit 12 x 12 = 144 Modulen sind 10-stellige Codes darstellbar, wodurch es möglich ist, 10¹⁰ verschiedene Codes und damit 10¹⁰ unterschiedliche Barcodes zu generieren. Vorzugsweise ist flächenmäßig benachbart zu einen zweidimensionalen Barcode, vorzugsweise diesen allseitig umschließend eine sogenannte Ruhezone vorgesehen. In dieser Ruhezone sollen keine Muster, Markierungen, Dekorationen oder andere, den Auslesevorgang möglicherweise behindernden optischen Markierungen vorhanden sein. Die Ruhezone beträgt bevorzugt mindestens eine Modulbreite/Modullänge, z.B. zwischen 0,1 mm und 5 mm, bevorzugt zwischen 0,1 mm und 2 mm. Für Anwendungen mit mittleren bis starken optischen "Rauschens", d.h. optischen Störeffekten der Umgebung, in unmittelbarer Nähe zum Symbol, wird eine minimale Ruhezone von 2 bis 4 Modulbreiten/Modullängen empfohlen, z.B. zwischen 0,5 mm und 5 mm. Sie ist somit abhängig von der Modulgröße. Für einen möglichst sicheren und störungsarmen Auslesevorgang des Barcodes ist es vorteilhaft, wenn der Barcode einen möglichst hohen Kontrast aufweist. Bevorzugt sollte der Kontrast mindestens 20 %, insbesondere mindestens 70 % betragen. Die Prozentwerte sollen den Unterschied des Reflexions- oder Absorptionsvermögens der Module zu einem Hintergrund darstellen.

Gemäß eines bevorzugten Ausführungsbeispiels der Erfindung umfasst die Dekorlage in den ersten Flächenbereichen mit den optisch variablen Dekorelementen jeweils eine oder mehrere optisch aktive Schichten, welche durch Interferenz und/oder Beugung des einfallenden Lichtes in Abhängigkeit von dem Einfallswinkel des einfallenden Lichts und/oder der Betrachtungsrichtung unterschiedliche Bildinformationen und/oder unterschiedliche Farben zeigen. Bevorzugt weist die Dekorlage in den ersten Flächenbereichen mit den optisch variablen Dekorelementen jeweils eine Replizierschicht mit einer in einer Oberfläche oder Replizierschicht abgeformte Reliefstruktur, insbesondere umfassend eine diffraktive Reliefstruktur, eine Reliefstruktur eines Hologramms, eine Makrostruktur und/oder eine Linsenstruktur, eine Volumenhologrammschicht mit einem Volumenhologramm, ein Dünnfilmschichtsystem und/oder eine Schicht umfassend cholesterische Flüssigkristalle auf. Diese Schichten sind weiter bevorzugt noch mit einer Reflexionsschicht, beispielsweise einer metallischen Schicht oder einer HRI-Schicht, einer Lackschicht und/oder einer Schicht enthaltend optisch variable Pigmente oder lumineszente oder thermochrome Pigmente kombiniert.

Weiter ist es auch vorteilhaft, dass jedes der optisch variablen Dekorelemente eine verborgene Information enthält, welche mittels eines Verifizierungselements sichtbar gemacht werden kann. So kann das optisch variable Dekorelement beispielsweise ein spezielles Hologramm enthalten, dessen Information lediglich mittels einer monochromatischen Lichtquelle, beispielsweise einem Laserpointer, als Verifizierungselement sichtbar gemacht werden kann. Das Verifizierungselement kann auch ein Polarisationsfilter oder eine optische Linse oder ein optisches Linsenarray sein.

Im Folgenden wird die Erfindung anhand von mehreren Ausführungsbeispielen unter Zuhilfenahme der beiliegenden Zeichnungen beispielhaft erläutert.
- Fig. 1: zeigt eine schematische Darstellung einer Draufsicht auf einen Ausschnitt eines Transferbandes.
- Fig. 2: zeigt eine schematische Darstellung eines Schnittbildes des Transferbandes nach Fig. 1.
- Fig. 3: zeigt eine schematische Darstellung eines Schnittbildes des Transferbandes nach Fig. 2 nach Durchführung eines Bearbeitungsschrittes.
- Fig. 4: zeigt eine schematische Darstellung eines Transferbandes in verschiedenen Bearbeitungsphasen.
- Fig. 5: zeigt eine schematische Schnittdarstellung mit einer dekorierten Oberfläche.
- Fig. 6: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine erste Ausführungsform.
- Fig. 7: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine weitere Ausführungsform.
- Fig. 8: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine weitere Ausführungsform.
- Fig. 9: zeigt eine schematische Draufsicht auf verschiedene Ausführungsformen von ersten und zweiten Flächenbereichen, die überlappend oder ineinander geschachtelt angeordnet sind.

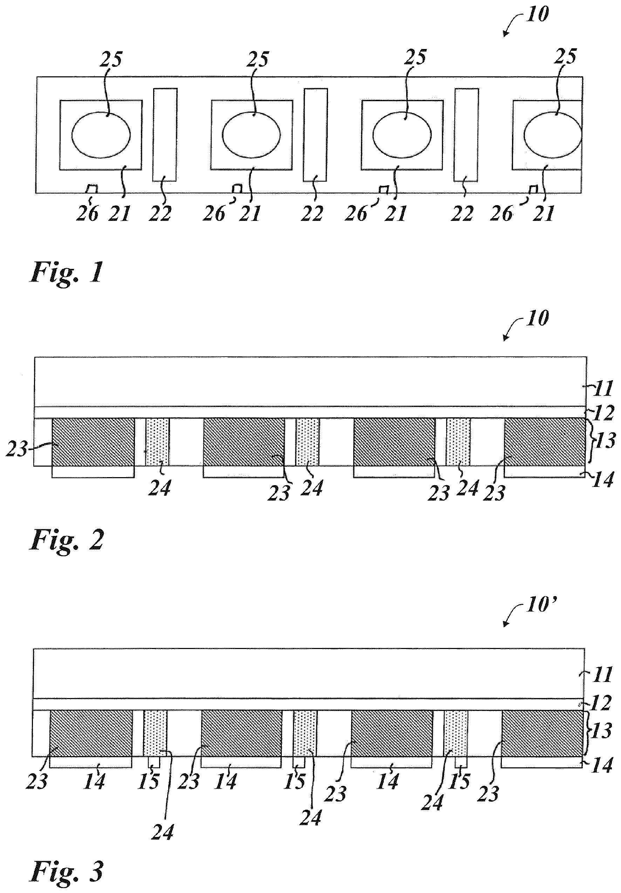

Fig. 1 und Fig. 2 zeigen einen Ausschnitt aus einem Transferband 10 mit mehreren Flächenbereichen 21 und 22 und Registermarken 26. Das Transferband 10 hat eine bandförmige Formgebung mit einer Breite, welche sich bevorzugt im Bereich von 5 mm bis 50 mm, bevorzugt von 15 mm bis 30 mm bewegt und einer Länge, welche vorzugsweise um den Faktor 500 größer als die Breite des Transferbandes 10 ist.

Das Transferband 10 weist eine bandförmige Trägerfolie 11, eine Ablöseschicht 12, eine Dekorlage 13 und eine partielle Kleberschicht 14 auf.

Bei der Trägerfolie 11 handelt es sich vorzugsweise um eine Kunststofffolie mit einer Schichtdicke zwischen 6 und 200 µm, weiter bevorzugt zwischen 12 und 36 µm. Die Trägerfolie besteht bevorzugt aus PET, BOPP, PVC, PC, PP.

Die Ablöseschicht 12 weist bevorzugt Wachskomponenten auf, welche bewirken, dass beim Erwärmen, insbesondere während eines Heißprägevorgangs, die durch die Ablöseschicht zwischen der Trägerfolie 11 und der Dekorlage 13 vermittelte Haftkraft verringert wird und so das Ablösen der Dekorlage von der Trägerfolie erleichtert wird.

Die Dekorlage 13 besteht aus einer oder mehreren Schichten. Die Dekorlage 13 weist hierbei eine oder mehrere optisch aktive, insbesondere optisch variable Schichten auf. Optisch variabel kann in diesem Zusammenhang bedeuten, dass der optisch wahrnehmbare Eindruck der Schicht in Abhängigkeit der Beleuchtungssituation und/oder des Blickwinkels variiert. Die optische Wahrnehmung kann dabei mit unbewaffnetem Auge erfolgen oder mit Hilfe von Polarisatoren, Vergrößerungs- oder Verkleinerungsoptiken oder anderen Hilfsmitteln. Diese optisch aktiven Schichten können hierbei von einer oder mehreren der folgenden Schichten gebildet werden:
Die Dekorlage 13 kann eine Replizierschicht mit vollflächig oder bereichsweise abgeformter Reliefstruktur aufweisen. Die Replizierschicht weist hierbei vorzugsweise eine Schichtdicke zwischen 0,1 und 5 µm, bevorzugt zwischen 0,2 µm und 2 µm auf und besteht aus einem thermoplastischen oder UVhärtbaren Replizierlack. In diese Replizierschicht wird mittels eines Prägestempels durch Einsatz von Hitze und Druck oder unter UV-Bestrahlung eine auf dem Prägestempel vorgesehene Reliefstruktur abgeformt. Bei dieser Reliefstruktur handelt es sich um eine optisch aktive Reliefstruktur. Die Reliefstruktur kann beispielsweise von einer diffraktiven Reliefstruktur gebildet werden, deren Spatialfrequenz zwischen 100 Linien/mm bis 3600 Linien/mm beträgt. Es kann sich hierbei weiter auch um eine holographische Reliefstruktur handeln, beispielsweise um die Reliefstruktur eines 2D/3D-Hologramms. Weiter kann es sich auch um die Reliefstruktur eines Kinoforms oder eines Fourier-Hologramms handeln, welches ggf. auch eine versteckte Information enthalten kann, die nur mittels Bestrahlung mit monochromatischem Licht, beispielsweise einem Laserpointer sichtbar gemacht werden kann. Weiter ist es auch möglich, dass die Reliefstruktur Bereiche aufweist, in denen die Reliefstruktur als Makrostruktur, Mattstruktur oder als linsenförmige Struktur ausgeformt ist, beispielsweise ein Mikrolinsenfeld ausbildet. In der Replizierschicht können auch in unterschiedlichen Bereichen der Dekorlage unterschiedliche der oben dargestellten Reliefstrukturen abgeformt sein, um so in unterschiedlichen Bereichen unterschiedliche optisch variable Informationen zu generieren.

Als optisch aktive Schicht kann in der Dekorlage weiter auch eine Reflexionsschicht, beispielsweise eine metallische Schicht mit einer Schichtdicke zwischen 10 und 100 nm, weiter bevorzugt zwischen 20 und 50 nm und/oder eine oder mehrere HRI- oder LRI-Schicht(en) (HRI = High Refraction Index, LRI = Low Refraction Index) mit einer Schichtdicke zwischen 60 und 120 nm vorgesehen sein, beispielsweise eine Schicht aus ZnS oder ZnO oder TiO₂, ZrO₂ als HRI-Schicht oder beispielsweise SiOₓ, SiO₂, MgF₂ als LRI-Schicht.

Weiter kann als optisch aktive Schicht in der Dekorlage auch eine Volumenhologrammschicht vorgesehen sein, welche beispielsweise eine Schichtdicke zwischen 10 und 30 µm aufweist und in welche ein Volumenhologramm eingeschrieben ist. Auch hier ist es möglich, dass in die Volumenhologrammschicht bereichsweise unterschiedliche Volumenhologramme eingeschrieben sind.

Weiter kann als optisch aktive Schicht in der Dekorlage auch eine Schicht Mikrolinsenarray (Kugellinsen und/oder Lentikular-Zylinderlinsen) in Kombination mit einer darunterliegenden Schicht mit Mikrobildinformationen vorgesehen sein, welche Kombination beispielsweise eine Schichtdicke zwischen 10 und 100 µm aufweist.

Weiter kann als optisch aktive Schicht in der Dekorlage auch eine oder eine Kombination der folgenden Schichten vorgesehen sein: ein Dünnfilmschichtsystem, eine Farblackschicht, eine Schicht enthaltend optisch variable Pigmente, beispielsweise Dünnfilmschichtpigmente, Metallpigmente oder Flüssigkristallpigmente, eine Schicht enthaltend orientierte Flüssigkristalle, eine Schicht enthaltend lumineszierende oder thermochrome Pigmente oder Mischungen derartiger Pigmente. Ein Dünnfilmschichtsystem besteht hierbei aus einer Abfolge von Schichten mit einer Distanzschicht, welche die λ-Viertel- und λ-Halbe-Bedingung für eine Lichtwellenlänge λ im Bereich des sichtbaren Lichts erfüllt und so blickwinkelabhängige Farbverschiebungseffekte zeigt. Ein derartiges Schichtsystem ist hierbei vorzugsweise dreischichtig, bestehend aus einer Absorptionsschicht, der oben beschriebenen Distanzschicht und einer Reflexionsschicht ausgebildet.

Neben den optisch aktiven Schichten weist die Dekorlage 13 vorzugsweise noch eine oder mehrere weitere Schichten, insbesondere eine oder mehrere Schutzschichten und/oder Haftvermittlungsschichten auf.

Vorzugsweise ist die Dekorlage 13 in den Flächenbereichen 21 einerseits und den Flächenbereichen 22 andererseits unterschiedlich ausgestaltet, und auch in den die Flächenbereiche 21 und 22 umgebenden Flächenbereichen wiederum anders ausgestaltet. So bildet die Dekorlage 13 beispielsweise in den Flächenbereichen 21 jeweils einen Mehrschichtkörper 23 aus und in den Flächenbereichen 22 jeweils einen Mehrschichtkörper 24 aus, wobei sich der Mehrschichtkörper 23 von dem Mehrschichtkörper 24 unterscheidet. Die Mehrschichtkörper 23 und 24 können sich hierbei in der Anzahl und Art der dort vorgesehenen optisch aktiven Schichten als auch in diesen Schichten kodierten Informationen unterscheiden, beispielsweise indem in jedem der Mehrschichtkörper 23 und 24 zwar eine Replizierschicht oder Volumenhologrammschicht vorgesehen ist, in den Mehrschichtkörpern 23 einerseits und den Mehrschichtkörpern 24 andererseits jedoch unterschiedliche Reliefstrukturen abgeformt bzw. unterschiedliche Volumenhologramme eingeschrieben sind. So ist es möglich, dass die Mehrschichtkörper 23 einerseits und die Mehrschichtkörper 24 andererseits eine unterschiedliche Kombination der oben angeführten optisch aktiven Schichten aufweisen, oder der Mehrschichtkörper 23 oder der Mehrschichtkörper 24 gegenüber dem Mehrschichtkörper 24 bzw. dem Mehrschichtkörper 23 noch zusätzliche der oben beschriebenen optisch aktiven Schichten aufweist.

So kann beispielsweise sowohl der Mehrschichtkörper 23 als auch der Mehrschichtkörper 24 eine metallische Reflexionsschicht enthalten, der Mehrschichtkörper 23 jedoch noch weiter zusätzlich eine Replizierschicht mit einem abgeformten Hologramm enthalten. Weiter ist es auch möglich, dass die Mehrschichtkörper 24 ebenfalls über eine Replizierschicht verfügen, in diese jedoch keine optisch aktive Oberflächenstruktur abgeformt ist. Weiter ist es möglich, dass der Mehrschichtkörper 24 nicht über eine Metallschicht verfügt, anstatt dessen jedoch über eine Schicht mit lumineszierenden Pigmenten oder über ein Dünnfilmschichtsystem verfügt, welche nicht in dem Mehrschichtkörper 23 vorgesehen ist.

Die Schichten im Mehrschichtkörper 24 sind weiter als individualisierbare Schicht ausgestaltet, welche - wie im Folgenden beschrieben - vor oder während der Transferierung dieser Schichten auf eine zu dekorierende Oberfläche individualisiert werden, um eine individualisierte maschinenlesbare optische Markierung auszubilden. So ist beispielsweise vorzugsweise die Bruchkraft dieser Schicht so gewählt, dass sie bei dem im Folgenden beschriebenen Verfahren lediglich in individualisierten Teilbereichen auf die zu dekorierende Oberfläche übertragen und damit individualisiert werden. Weiter ist es beispielsweise möglich, dass diese Schichten so gewählt sind, dass sie entsprechend transparent sind, dass sie durch das Aufdrucken einer Farbschicht individualisiert werden können.

Wie in Fig. 1 gezeigt, weisen die Flächenbereiche 21 weiter jeweils ein optisch variables Dekorelement 25 auf. Dieses Dekorelement 25 kann hierbei - wie in Fig. 1 gezeigt - lediglich einen Teilbereich des Flächenbereichs 21 umfassen oder auch den gesamten Flächenbereich des Flächenbereichs 21 umfassen.

Das Dekorelement umfasst damit jeweils einen der Mehrschichtkörper 23 oder einen Teilbereich eines der Mehrschichtkörper 23. Die Mehrschichtkörper 23 sind hierbei so gewählt, dass die Dekorelemente 25 gleichartig sind. Die Dekorelemente 25 besitzen somit den identischen Schichtaufbau, die identische Abfolge von Schichten und auch die in die Schicht der Mehrschichtkörper 23 ggf. kodierten Informationen, beispielsweise in Form einer Reliefstruktur oder eines eingeschriebenen Volumenhologramms sind identisch, sodass sämtliche der Dekorelemente 25 dem Betrachter die gleiche optisch variable Information vermitteln. Geringfügige Abwandlungen der Informationen im Rahmen der Fertigungstoleranz der eingesetzten Herstellungsverfahren sind natürlich möglich.

Wie in Fig. 2 gezeigt, ist auf die Dekorlage 13 in den Flächenbereichen 21 eine Kleberschicht 14 aufgebracht. Bei der Kleberschicht 14 handelt es sich um eine Kleberschicht mit einer Schichtdicke zwischen 0,5 und 5 µm, bevorzugt zwischen 1 µm und 2 µm. Die Kleberschicht 14 besteht hierbei aus einem thermisch aktivierbaren Kleber. Es ist jedoch auch möglich, dass als Kleber für die Kleberschicht 14 ein durch Druck aktivierbarer Kleber oder ein mittels UV-Strahlung aktivierbarer Kleber eingesetzt wird. Gemäß einem nicht erfindungsgemäßen Ausführungsbeispiel, welches im Folgenden anhand der Figuren Fig. 3 bis Fig. 5 erläutert wird, ist die Kleberschicht 14 zwar - wie in Fig. 2 gezeigt - in den Flächenbereichen 21 aufgebracht, nicht jedoch in den Flächenbereichen 22. Auch bei dieser Ausführungsform ist es möglich, dass die Kleberschicht 14 noch in weiteren Flächenbereichen des Transferbandes 10 vorgesehen ist, die nicht den Flächenbereichen 21 und 22 zuzuordnen sind.

Die Kleberschicht 14 wird bevorzugt mittels eines großindustriellen Verfahrens, beispielsweise mittels Tiefdruck oder Siebdruck bei der Herstellung des Transferbandes 10 auf die Dekorlage 13 aufgedruckt.

Vor der Dekoration des Zielsubstrats wird nun in den Flächenbereichen 22 jeweils eine musterförmige Kleberschicht 5 aufgedruckt, deren Formgebung der Formgebung der individualisierten maschinenlesbaren optischen Markierung entspricht. Die maschinenlesbaren optischen Markierungen bestehen hierbei vorzugsweise aus jeweils einem eindimensionalen oder zweidimensionalen Barcode. So werden beispielsweise die aufeinanderfolgenden Flächenbereiche 22 jeweils mit einem unterschiedlichen Klebermuster bedruckt, welches jeweils der Formgebung eines unterschiedlichen eindimensionalen oder zweidimensionalen Barcodes entspricht.

Die Kleberschicht 15 wird hierbei bevorzugt mittels eines Tintenstrahldruckers aufgedruckt. Eine Registrierungsvorrichtung erfasst hierzu die Registermarken 26 und steuert einen Tintenstrahldruckkopf derart an, dass er den jeweiligen Flächenbereich 22 mit dem Muster des jeweils zugeordneten ein- oder zweidimensionalen Barcode bedruckt.

Als zu verdruckendes Druckmedium wird hierbei ein Druckmedium verwendet, welcher eine Lösung enthaltend einen durch Hitze und/oder Druck und/oder Strahlung aktivierbaren Kleber enthält.
Weiter ist es auch möglich, dass die Kleberschicht 15 - wie bereits oben geschildert - mittels eines Laserdruckwerks oder mittels Thermotransferdrucks unter Zuhilfenahme einer Transferfolie auf die Dekorlage 13 aufgebracht wird.

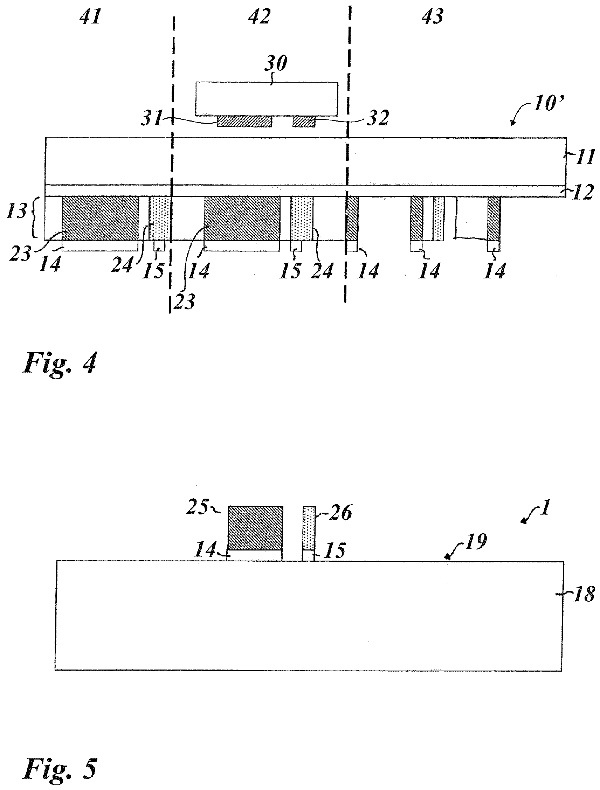

Das derart mit der zusätzlichen Kleberschicht 15 versehene Transferband 10' wird nun einem Prägewerk zugeführt, mittels dem die Dekorelemente 25 und die individualisierten maschinenlesbaren optischen Markierungen auf die zu dekorierende Oberfläche übertragen werden. Fig. 4 zeigt so beispielhaft jeweils einen Ausschnitt des Transferbandes 10' in einer Phase 41 vor Transferierung des Dekorelements 25 und der individualisierten maschinenlesbaren optischen Markierungen, einer Phase 42 während der Transferierung des Dekorelements 25 sowie der individualisierten maschinenlesbaren optischen Markierungen und einer Phase 43 nach Transferieren des Dekorelements 25 und der individualisierten maschinenlesbaren optischen Markierungen.

In der Phase 41 ist das Transferband 10' noch wie in Fig. 3 gezeigt, aufgebaut. In der Phase 42 wird ein Prägewerkzeug 30 von Seiten der Trägerfolie 11 auf das Transferband 10' gepresst, sodass das Transferband 10' gegen die in Fig. 4 nicht gezeigt zu dekorierende Oberfläche gepresst wird. Wie in Fig. 4 gezeigt, weist das Prägewerkzeug 30 eine erhabene Prägefläche 31 sowie eine erhabende Prägefläche 32 auf. Die erhabene Prägefläche 31 ist hierbei in Form des Dekorelements 25 ausgeformt, d.h. die Umrisslinien der Prägefläche 31 entsprechen den Umrisslinien des Dekorelements 25. Die Prägefläche 32 ist in Form der Flächenbereiche 22 ausgeformt. Die Prägeflächen 31 und 32 sind derart voneinander beabstandet auf dem Prägewerkzeug 30 angeordnet, dass die Prägefläche 32 deckungsgleich auf einen Flächenbereich 22 des Transferbandes 10' auftritt und die Prägefläche 31 innerhalb eines zugeordneten Flächenbereiches 21 des Transferbandes 10' auf das Transferband 10' auftrifft. Bei dem Prägewerkzeug 30 handelt es sich vorzugsweise um einen beheizten Prägestempel.

Durch den durch die Prägeflächen 31 und 32 auf das Transferband ausgeübten Druck wird die Transferfolie 10' im Bereich der Prägeflächen 31 und 32 gegen die zu dekorierende Oberfläche gepresst. Der hierdurch generierte Druck und/oder die von den Prägeflächen 31 und 32 auf das Transferband 10' übertragene Hitze aktiviert sodann die Kleberschichten 14 und 15 in den Flächenbereichen des Transferbandes 10', in denen die Prägeflächen 31 und 32 aufliegen.

So zeigt beispielsweise Fig. 5 ein Trägermaterial 18 eines Substratblattes oder einer Umverpackung, beispielsweise einer Umverpackung für Zigaretten. Das Trägermaterial 18 besteht hier beispielsweise aus einem Papierträger, welcher ggf. noch mit einer oder mehreren Lackschichten oder Kunststoffschichten beschichtet ist. Auf der Oberfläche 19 des Trägermaterials 18 haftet durch den oben beschriebenen Prozess nun ein Dekorelement 25 an sowie in den Teilbereichen eines Flächenbereichs 22, welche mit der Kleberschicht 15 belegt sind, ein Teilbereich des Mehrschichtkörpers 24 an, welcher in Form einer individualisierten maschinenlesbaren optischen Markierung strukturiert ist und so eine individualisierte maschinenlesbaren optischen Markierung 26 bildet.

Nach Aktivierung der Kleberschichten 14 und 15, wie oben beschrieben, wird das Trägerband 10' von der zu dekorierenden Oberfläche abgezogen. Die Haftkraft der Kleberschichten 14 und 15 zwischen der Dekorlage 13 einerseits und der zu dekorierenden Oberfläche 19 andererseits, die durch die Ablöseschicht 12 vermittelte Haftkraft zwischen der Dekorlage 13 einerseits und der Trägerfolie 11 andererseits und die Bruchkraft der Schichten der Dekorlage 13 sind hierbei so eingestellt, dass in Bereichen der Kleberschicht 15 und in dem Bereich, in dem die Kleberschicht 14 durch die Prägefläche 31 wie oben beschrieben aktiviert worden ist, die Dekorlage auf der zu dekorierenden Oberfläche 19 verbleibt und in den übrigen Bereich die Dekorlage auf dem Transferband 10' verbleibt und beim Abziehen diese Teilbereiche voneinander getrennt werden.

Nach Abziehen des Trägerbandes 10' verbleiben auf dem Trägerband 10' damit die in Fig. 4 in der Phase 43 gezeigten Bereiche der Dekorlage 13. Auf der zu dekorierenden Oberfläche 19 sind die in Fig. 5 gezeigten Teilbereiche der Dekorlage 13 des Transferbandes 10' transferiert. Die Umverpackung 1 weist damit auf dem Trägermaterial 18 ein Dekorelement 25 auf, welches von einem in Formgebung des Dekorelements ausgeformten Bereichs eines Mehrschichtkörpers 23 besteht und dessen Schichtaufbau damit dem Schichtaufbau der Mehrschichtkörper 23 entspricht. Weiter ist hierzu passergenau eine individualisierte maschinenlesbare optische Markierung 26 aufgebracht, deren Schichtaufbau dem Schichtaufbau der Mehrschichtkörper 24 entspricht.

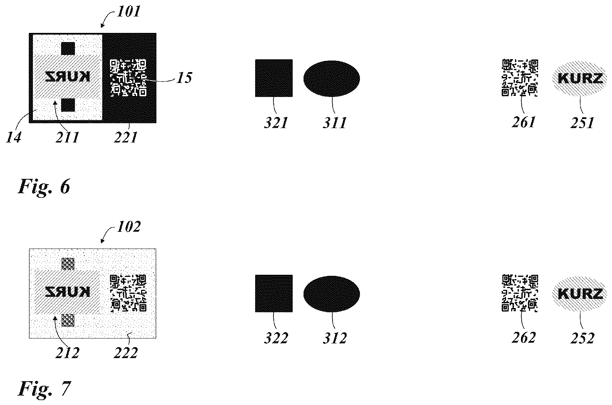

Fig. 6 zeigt beispielhaft eine entsprechende Ausgestaltung eines Ausschnitts 101 aus einem Transferband 10'.

Der Ausschnitt 101 weist einen Flächenbereich 211 sowie einen Flächenbereich 221 auf. Der Flächenbereich 211 entspricht dem Flächenbereich 21 und der Flächenbereich 221 dem Flächenbereich 22. In dem Flächenbereich 211 weist die Dekorlage 13 als Mehrschichtkörper 23 eine Replizierschicht mit einer abgeformten holographischen Reliefstruktur sowie eine an die Replizierschicht angrenzende metallische Reflexionsschicht aus Aluminium als optisch aktive Schichten auf. In dem Flächenbereich 211 ist weiterhin eine vollflächige Kleberschicht 14 aufgedruckt, die zumindest den Bereich der Replizierschicht mit der abgeformten holographischen Reliefstruktur abdeckt. In dem Flächenbereich 221 ist eine vollflächige metallische Reflexionsschicht als optisch aktive Schicht vorgesehen. Im Flächenbereich 221 ist - wie mit heller Färbung angedeutet - musterförmig die Kleberschicht 15 in Form eines zweidimensionalen Barcodes aufgedruckt. Die für den Transfer eingesetzten Prägeflächen 31 und 32 sind wie die Prägeflächen 311 bzw. 321 nach Fig. 6 ausgestaltet. Das transferierte Dekorelement ist in der Draufsicht wie das Dekorelement 251 nach Fig. 6 und die transferierte individualisierte maschinenlesbare optische Markierung wie die optische Markierung 261 mit der entsprechend der musterförmigen Kleberschicht 15 ausgeformten metallischen Reflexionsschicht nach Fig. 6 ausgeformt.

Ein Ausführungsbeispiel der Erfindung wird nun im Weiteren anhand von Fig. 7 erläutert.

Bei diesem Ausführungsbeispiel wird das gemäß den Figuren Fig. 1 und Fig. 2 gefertigte Transferband 10 nicht nur in den Flächenbereichen 21, sondern ebenfalls in den Flächenbereichen 22 mit der Kleberschicht 14 versehen. Bzgl. des Aufbaus der Schichten des Transferbandes 10 sowie dessen Ausgestaltung wird auf die obigen Ausführungen zu Fig. 1 und Fig. 2 verwiesen.

Zur Individualisierung wird nun auf die Kleberschicht 14 in den jeweiligen Flächenbereichen 22 eine Deaktivierungsschicht musterförmig aufgebracht, wobei die Formgebung der Deaktivierungsschicht der Formgebung der individualisierten maschinenlesbaren optischen Markierung in Negativform entspricht. Die Deaktivierungsschicht wird hierbei mittels der bereits oben in Bezug auf Fig. 3 beschriebenen Verfahren aufgebracht, also insbesondere mittels Tintenstrahldruck, mittels eines Laserdruckers oder mittels eines Thermotransferdruckkopfs von einer Transferfolie. Die Deaktivierungsschicht besitzt hier vorzugsweise eine Schichtdicke von 0,1 µm bis 2 µm.

Für eine mittels eines Tintenstrahldruckers verdruckbare Deaktivierungsschicht eignen sind Silikonacrylate, kombiniert mit einem Bindemittel, wobei beide Komponenten und ggf. weitere Hilfsstoffe strahlungshärtend sein sollen, um beim Anpressen des Transferbandes mittels Prägewerkzeug unter Einwirkung von Wärme keine klebenden oder haftenden Eigenschaften mehr aufzuweisen und dadurch die klebenden oder haftenden Eigenschaften der Kleberschicht wirksam deaktivieren zu können.

Der Transfer des Dekorelements 25 und der individualisierten maschinenlesbaren optischen Markierung 26 erfolgt sodann auf die gleiche Art und Weise wie oben anhand der Figuren Fig. 4 und Fig. 5 dargestellt, bis auf dass die Kleberschicht 14 ebenfalls in den Flächenbereich 22 vorgesehen ist und in den Flächenbereichen, in denen nach Fig. 4 die Kleberschicht 15 aufgebracht ist, die Deaktivierungsschicht nicht vorgesehen ist und in den Teilbereichen des Flächenbereichs 22, in denen nach Fig. 4 die Kleberschicht 15 nicht vorgesehen ist, die Deaktivierungsschicht vorgesehen ist. Es wird so auf die diesbezüglichen obigen Ausführungen zu Fig. 4 und Fig. 5 verwiesen.

Fig. 7 zeigt nun eine beispielhafte Ausführungsform eines Abschnitts 102 eines mittels einer Deaktivierungsschicht in der oben beschriebenen Art und Weise individualisierten Transferbandes 10, die Ausformung der zugeordneten Prägeflächen 312 und 322, sowie des transferierten Dekorelements 252 und der transferierten individualisierten maschinenlesbaren optischen Markierung 262.

Die Flächenbereiche 21 sind so wie die Flächenbereiche 212 ausgebildet und die Flächenbereiche 22 wie die Flächenbereiche 222 ausgebildet. Wie in Fig. 7 gezeigt, ist das Transferband vollflächig mit einer Kleberschicht beschichtet und in dem Flächenbereich 222 ist in negativer Form eine (in dunkler Farbe angedeutete) Deaktivierungsschicht aufgedruckt. Nach Transferierung mittels eines Prägewerkzeugs mit den Prägeflächen 312 und 322 weist die dekorierte Oberfläche das Dekorelement 252 sowie die individualisierte maschinenlesbare optische Markierung 262 auf.

Alternativ hierzu kann auch auf das Aufdrucken der Deaktivierungsschicht in negativer Form verzichtet werden und anstatt dessen - wie bereits oben ausgeführt - in den Flächenbereichen 22 eine strahlenaktivierbare oder - deaktivierbare Kleberschicht aufgebracht werden. Das Transferband ist ansonsten wie oben bereits anhand der Figuren Fig. 1 und Fig. 2 erläutert aufgebaut. Wie bereits oben ausgeführt, wird im Folgenden die Kleberschicht in den Bereichen 22 musterförmig in Positiv- oder Negativform der individualisierten maschinell lesbaren optischen Kodierung belichtet. Als Kleber wird hierbei vorzugsweise ein UV-vernetzbarer Kleber verwendet und die Bestrahlung erfolgt vorzugsweise mittels eine entsprechenden UV-Lasers.

Alternativ, aber nicht erfindungsgemäß, oder zusätzlich ist es möglich, wie bereits oben ausgeführt eine strahlenvernetzbare Ablöseschicht vorzusehen und diese Ablöseschicht in einer Negativform der jeweiligen individualisierten maschinenlesbaren optischen Kodierung zu belichten.

Es ist hierbei auch möglich, dass mittels eines und desselben Belichtungsvorgangs gleichzeitig eine strahlenvernetzbare Ablöseschicht und eine strahlenvernetzbare Kleberschicht belichtet wird und hierdurch die Kantenschärfe der transferierten individualisierten maschinenlesbaren optischen Markierung weiter verbessert wird.

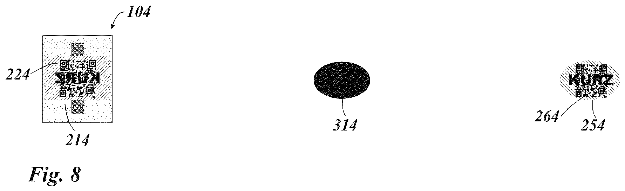

Gemäß einer weiteren nicht erfindungsgemäßen Ausführungsform wird das Transferband 10 nicht nur in den Flächenbereichen 21, sondern in den Flächenbereichen 22 mit der Kleberschicht 14 beschichtet und anschließend in den Flächenbereichen 22 jeweils eine musterförmige Farbschicht aufgebracht, deren Formgebung der Formgebung der individualisierten maschinenlesbaren optischen Markierung entspricht. Der Aufbau des Transferbandes entspricht dem bereits anhand der Figuren Fig. 1 und Fig. 2 beschriebenen Aufbau und es wird auf die diesbezüglichen Ausführungen nach Fig. 1 und Fig. 2 verwiesen. Der Transfer eines Dekorelements 25 und einer jeweiligen individualisierten maschinenlesbaren optischen Markierung auf die zu dekorierende Oberfläche erfolgt wie oben bereits anhand der Figuren Fig. 4 und Fig. 5 beschrieben, mit dem Unterschied, dass die Dekorlage im Flächenbereich 22 vollflächig transferiert wird. Im Weiteren ist es auch möglich, dieses Verfahren mit einem oder mehreren der bereits oben geschilderten Verfahren zu kombinieren. Eine besonders bevorzugte Ausführungsform dieser Variante wird nun anhand von Fig. 8 erläutert. Fig. 8 zeigt zum Einen einen Ausschnitt 104 aus einem Transferband, eine Prägefläche 314, ein Dekorelement 254 und eine individualisierte maschinenlesbare optische Markierung 264.

Bei der Ausführungsform nach Fig. 8 sind die Flächenbereiche 22 des Transferbandes 10 nicht, wie in Fig. 1 gezeigt, getrennt und beabstandet von den Flächenbereichen 21 angeordnet, sondern die Flächenbereiche 21 und 22 überlappen sich. Die Flächenbereiche 21 sind so wie der Flächenbereich 214 und die Flächenbereiche 22 so wie der Flächenbereich 224 nach Fig. 8 zueinander angeordnet, sodass die Flächenbereiche 22 jeweils einen Teilbereich der Flächenbereiche 21 bilden. In dem Flächenbereich 214 weist der Mehrschichtkörper 23 bei dem Ausführungsbeispiel nach Fig. 8 eine Replizierschicht mit einer abgeformten Reliefstruktur eines Hologramms sowie eine vollflächige HRI-Schicht auf. Die Transparenz dieser beiden Schichten ist hierbei so gewählt, dass sich eine Gesamttransparenz von mehr als 75% ergibt. In dem Flächenbereich 214, welcher der individualisierbaren maschinenlesbaren optischen Markierung zugeordnet ist, ist eine Farbschicht musterförmig in Form eines zweidimensionalen Barcodes aufgedruckt, wie dies in Fig. 8 gezeigt ist. Die Farbschicht wird mittels eines Tintenstrahlendruckers, Laserdruckers oder mittels eines Thermotransferdruckkopfes aufgedruckt. Vorzugsweise wird ein Farblack, insbesondere ein schwarz eingefärbter Farblack verwendet. Durch die Verwendung der transparenten oder transluzenten HRI-Schicht wird eine überlappende Anordnung der maschinenlesbaren optischen Markierung und des Dekorelements ermöglicht. Dabei ist es zweckmäßig, wenn für den Farblack eine Farbe gewählt wird, die im Vergleich zu der Farbe des Trägermaterials 18 einen Kontrast von mindestens 20%, bevorzugt mindestens 70% ergibt. Die Prozentwerte sollen den Unterschied des Reflexions- oder Absorptionsvermögens der Module zu einem Hintergrund darstellen.

Es ist natürlich auch möglich, wie oben beispielsweise bei den Ausführungsbeispielen nach Fig. 6 und 7 ausgeführt, das Dekorelement und die individualisierte maschinenlesbare optische Markierung in voneinander getrennten Flächenbereichen auf die zu dekorierende Oberfläche zu transferieren. Durch die Verwendung einer HRI-Schicht oder anderer zumindest teiltransparenter, optisch variable Effekte generierenden Schichten in dem Mehrschichtkörper 24 ist es hierbei möglich, die individualisierte optisch variable Markierung noch mit zusätzlichen, optisch variablen Effekten zu versehen.

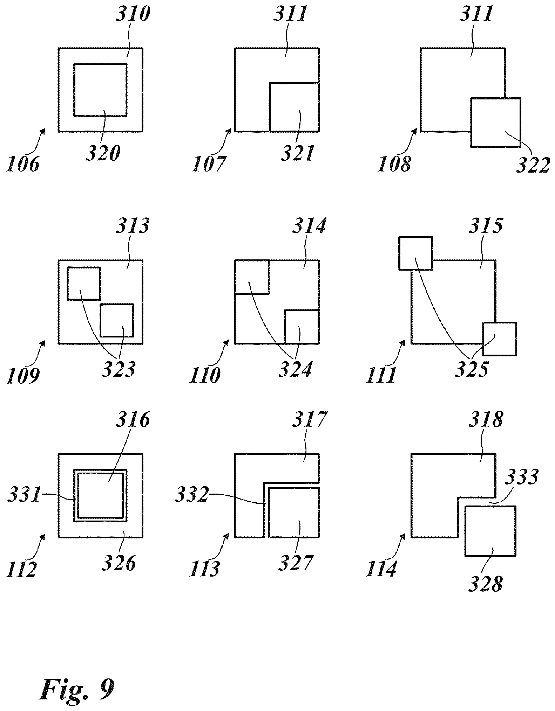

Fig. 9 zeigt verschiedene Abschnitte 106 bis 114 verschiedener Transferfolien 10, die verschiedene Anordnungen von ersten und zweiten Flächenbereichen aufweisen.

Der Abschnitt 106 weist eine Anordnung auf, in der ein erster Flächenbereich 310 einen umlaufenden, geschlossenen Rahmen für einen innerhalb des Rahmens angeordneten zweiten Flächenbereich 320 bildet.

Abschnitt 107 weist eine Anordnung auf, bei der ein erster Flächenbereich 107 einen offenen, einen zweiten Flächenbereich 321 nur an zwei Außenseiten umfassenden Rahmen bildet. Der erste und der zweite Flächenbereich bilden dabei eine gemeinsame rechteckige Außenkontur, wobei die Kantenlänge des ersten Flächenbereichs 311 die Gesamtkantenlänge beider Flächenbereiche definiert. Das heißt, dass der zweite Flächenbereich 321 innerhalb der Konturen des ersten Flächenbereichs 311 angeordnet ist.

Der Abschnitt 108 weist eine Anordnung auf, bei der ein erster Flächenbereich 312 einen offenen, einen zweiten Flächenbereich 322 nur an zwei Außenseiten umfassenden Rahmen bildet. Die gemeinsame Außenkontur des ersten und zweiten Flächenbereichs ist nicht rechteckig, vielmehr ragt der zweite Flächenbereich 322 aus der gedachten rechteckigen Kontur des ersten Flächenbereichs 312 heraus bzw. überlappt die rechteckige Kontur des ersten Flächenbereichs 312 mit der rechteckigen Kontur des zweiten Flächenbereichs 322 partiell.

Der Abschnitt 109 weist eine Anordnung eines ersten Flächenbereichs 313 und zwei zweiten Flächenbereichen 323 auf, die ähnlich dem Abschnitt 106 innerhalb der Außenkontur des ersten Flächenbereichs 313 angeordnet sind. Der erste Flächenbereich 313 bildet dabei einen Rahmen und/oder einen Hintergrund für die zweiten Flächenbereiche 323.

Der Abschnitt 110 weist eine Anordnung auf, bei der ein erster Flächenbereich 314 nur bereichsweise die zweiten Flächenbereiche 324 umschließt, ähnlich dem Abschnitt 107. Das heißt, dass die zweiten Flächenbereiche 324 innerhalb der Konturen des ersten Flächenbereichs 314 angeordnet sind.

Der Abschnitt 111 weist eine Anordnung ähnlich der des Abschnitts 108 mit zwei zweiten Flächenbereichen 325 auf. Die zweiten Flächenbereiche 325 ragen aus der gedachten rechteckigen Kontur des ersten Flächenbereichs 315 heraus bzw. überlappen die rechteckige Kontur des ersten Flächenbereichs 315 mit den jeweils rechteckigen Konturen des zweiten Flächenbereichs 325 partiell.

Die Abschnitte 112 bis 114 entsprechen den Anordnungen gemäß der Abschnitte 106 bis 108 mit dem Unterschied, dass die jeweiligen ersten und zweiten Flächenbereiche 316 bis 318 bzw. 326 bis 328 nicht direkt aneinander grenzen, sondern dass dazwischen jeweils eine Ruhezone 331 bis 333 als Freiraum angeordnet ist. Der Freiraum kann insbesondere als Ruhezone für einen maschinenlesbaren Code im ersten und/oder zweiten Flächenbereich 316 bis 318 bzw. 326 bis 328 vorgesehen sein. Die Breite und/oder Länge der Ruhezonen 331 bis 333 kann dabei an die Erfordernisse des jeweiligen maschinenlesbaren Codes angepasst sein und beträgt vorzugsweise zwischen 0,1 mm und 5 mm.

Die prinzipiellen Anordnungen gemäß der Abschnitte 106 bis 114 sind auch mit anders geformten ersten und zweiten Flächenbereichen denkbar, beispielsweise mit runden, ovalen, dreieckigen, vieleckigen oder unregelmäßig geformten ersten und zweiten Flächenbereichen.

Optisch variable Effekte können entweder dem ersten oder zweiten Flächenbereich zugeordnet sein, insbesondere lagegenau, d.h. im Register zu dem ersten oder zweiten Flächenbereich angeordnet sein. Optisch variable Effekte können sich aber auch kontinuierlich ohne Unterbrechung über die ersten und zweiten Flächenbereich erstrecken. Ebenso sind Kombinationen möglich aus optisch variablen Effekten, die bereichsweise dem ersten oder zweiten Flächenbereich zugeordnet sind und sich bereichsweise kontinuierlich ohne Unterbrechung über die ersten und zweiten Flächenbereich erstrecken.

## Patentansprüche

1. Verfahren zur Dekoration von Oberflächen (19), insbesondere zur Dekoration von Umverpackungen, wobei das Verfahren folgende Schritte umfasst:
Bereitstellen eines Transferbandes (10) umfassend eine bandförmige Trägerfolie (11) und eine Dekorlage (13), wobei die Dekorlage (13) eine Vielzahl von gleichartigen optisch variablen Dekorelementen (25, 251 bis 255) aufweist, die in voneinander getrennten und in Längsrichtung des Transferbandes voneinander beabstandeten ersten Flächenbereichen (21, 211 bis 215) angeordnet sind, und wobei die Dekorlage (13) voneinander getrennte und in Längsrichtung des Transferbandes voneinander beabstandete zweite Flächenbereiche (22, 221 bis 225) aufweist, in denen die Dekorlage (13) ein oder mehrere individualisierbare Schichten zur Bereitstellung von jeweils unterschiedlichen maschinenlesbaren optischen Markierungen (26, 261 bis 265) aufweist,
Transferieren jeweils eines ersten Flächenbereichs (21, 211 bis 215) oder eines Teilbereichs eines ersten Flächenbereichs (21, 211 bis 215) sowie eines zweiten Flächenbereichs (22, 221 bis 225) oder eines Teilbereichs eines zweiten Flächenbereichs (22, 221 bis 225) der Dekorlage (13) auf eine zu dekorierende Oberfläche (19), wobei die ein oder mehreren individualisierbaren Schichten des jeweiligen zweiten Flächenbereichs (22, 221 bis 225) vor oder während der Transferierung individualisiert werden, sodass neben einem der optisch variablen Dekorelemente (25, 251 bis 255) eine individualisierte maschinenlesbare optische Markierung (26, 261 bis 265) von dem Transferband (10) auf die zu dekorierende Oberfläche (19) transferiert wird,
**dadurch gekennzeichnet,dass**
das Transferband eine zwischen der Dekorlage (13) und der Trägerfolie (11) angeordnete Ablöseschicht (12) umfasst, dass
die der Ablöseschicht (12) entgegengesetzte Oberfläche der Dekorlage (13) im zweiten Flächenbereichen (22, 222) vollflächig mit einer Kleberschicht versehen wird, dass zur Individualisierung auf die Kleberschicht im zweiten Flächenbereich (22, 222) eine musterförmige Deaktivierungsschicht aufgebracht wird, wobei die Formgebung der Deaktivierungsschicht der Formgebung der individualisierten maschinenlesbaren optischen Markierung (25, 252) in Negativform entspricht, dass beim Transferieren das Transferband (30) im zweiten Flächenbereich (22, 222) mittels eines Prägewerkzeugs gegen die zu dekorierende Oberfläche (19) gepresst wird, dass in den Teilbereichen, in denen die musterförmige Deaktivierungsschicht nicht zwischen der Kleberschicht und der zu dekorierenden Oberfläche (19) angeordnet ist, die individualisierbaren Schichten beim Abziehen auf der zu dekorierenden Oberfläche (19) verbleiben, und in den übrigen Teilbereichen des zweiten Flächenbereichs (22, 222), in denen die Deaktivierungsschicht vorgesehen ist, die individualisierbaren Schichten auf dem Transferband verbleiben und beim Abziehen von den auf der zu dekorierenden Oberfläche (19) verbleibenden Teilbereichen getrennt werden.

2. Verfahren zur Dekoration von Oberflächen (19), insbesondere zur Dekoration von Umverpackungen, wobei das Verfahren folgende Schritte umfasst:
Bereitstellen eines Transferbandes (10) umfassend eine bandförmige Trägerfolie (11) und eine Dekorlage (13),
wobei die Dekorlage (13) eine Vielzahl von gleichartigen optisch variablen Dekorelementen (25, 251 bis 255) aufweist, die in voneinander getrennten und in Längsrichtung des Transferbandes voneinander beabstandeten ersten Flächenbereichen (21, 211 bis 215) angeordnet sind, und wobei die Dekorlage (13) voneinander getrennte und in Längsrichtung des Transferbandes voneinander beabstandete zweite Flächenbereiche (22, 221 bis 225) aufweist, in denen die Dekorlage (13) ein oder mehrere individualisierbare Schichten zur Bereitstellung von jeweils unterschiedlichen maschinenlesbaren optischen Markierungen (26, 261 bis 265) aufweist,
Transferieren jeweils eines ersten Flächenbereichs (21, 211 bis 215) oder eines Teilbereichs eines ersten Flächenbereichs (21, 211 bis 215) sowie eines zweiten Flächenbereichs (22, 221 bis 225) oder eines Teilbereichs eines zweiten Flächenbereichs (22, 221 bis 225) der Dekorlage (13) auf eine zu dekorierende Oberfläche (19), wobei die ein oder mehreren individualisierbaren Schichten des jeweiligen zweiten Flächenbereichs (22, 221 bis 225) vor oder während der Transferierung individualisiert werden, sodass neben einem der optisch variablen Dekorelemente (25, 251 bis 255) eine individualisierte maschinenlesbare optische Markierung (26, 261 bis 265) von dem Transferband (10) auf die zu dekorierende Oberfläche (19) transferiert wird,
**dadurch gekennzeichnet,dass** das Transferband eine zwischen der Dekorlage (13) und der Trägerfolie (11) angeordnete Ablöseschicht (12) umfasst, dass die der Ablöseschicht entgegengesetzte Oberfläche der Dekorlage (13) im zweiten Flächenbereich (22) vollflächig mit einer strahlenaktivierbaren oder strahlendeaktivierbaren Kleberschicht versehen wird, dass zur Individualisierung die Kleberschicht im zweiten Flächenbereich (22) musterförmig mit einer zur Aktivierung bzw. Deaktivierung der Kleberschicht geeigneten Strahlenquelle musterförmig bestrahlt wird, wobei die Formgebung der bestrahlten Teilbereiche der Formgebung der individualisierten maschinenlesbaren optischen Markierung bzw. der Formgebung der individualisierten maschinenlesbaren optischen Markierung in Negativform entspricht, dass beim Transferieren das Transferband (30) im zweiten Flächenbereich (22) mittels eines Prägewerkzeugs gegen die zu dekorierende Oberfläche gepresst wird, dass in den Teilbereichen, in denen die Kleberschicht aktiviert bzw. nicht deaktiviert ist, die individualisierbaren Schichten beim Abziehen auf der zu dekorierenden Oberfläche (19) verbleiben und in den übrigen Teilbereichen des zweiten Flächenbereichs (22) die individualisierbaren Schichten auf dem Transferband (10) verbleiben und beim Abziehen von den auf der zu dekorierenden Oberfläche verbleibenden Teilbereichen getrennt werden.

3. Verfahren nach einem der vorhergehenden Ansprüche,
**dadurch gekennzeichnet,**
**dass** die ein oder mehreren individualisierbaren Schichten zur Ausbildung eines eindimensionalen Barcodes und/oder eines zweidimensionalen Barcodes als individualisierte maschinenlesbare optische Markierung (26, 261 bis 265) individualisiert werden.

4. Verfahren nach einem der vorgehenden Ansprüche,
**dadurch gekennzeichnet,**
**dass** die Dekorlage (13) in den ersten Flächenbereichen (21, 211 bis 215) und/oder in den zweiten Flächenbereichen jeweils ein oder mehrere optisch aktive Schichten umfasst, welche durch Interferenz und/oder Beugung des einfallenden Lichts in Abhängigkeit vom Einfallswinkel des einfallenden Lichts und/oder der Betrachtungsrichtung unterschiedliche Bildinformationen und/oder unterschiedliche Farben zeigen, und/oder dass die Dekorlage in den ersten Flächenbereichen (21, 211 bis 215) und/oder den zweiten Flächenbereichen jeweils eine Replizierschicht mit einer in eine Oberfläche der Replizierschicht zumindest bereichsweise abgeformten Reliefstruktur, insbesondere umfassend eine diffraktive Reliefstruktur, eine Reliefstruktur eines Hologramms, eine Makrostruktur und/oder eine Linsenstruktur, eine Volumenhologrammschicht mit einem Volumenhologramm, ein Dünnfilmschichtsystem und/oder eine Schicht umfassend cholesterische Flüssigkristalle aufweist, und/oder dass jedes der optisch variablen Dekorelemente (26, 261 bis 265) eine verborgene Information enthält, welche mittels eines Verifizierungselements sichtbar gemacht werden kann, und/oder dass die Dekorlage (13) in den zweiten Flächenbereichen (22, 221 bis 225) jeweils eine eingefärbte Lackschicht, eine metallische Reflexionsschicht, eine Replizierschicht mit abgeformter Reliefstruktur, eine Volumenhologrammschicht, ein Dünnfilmschichtsystem und/oder eine Schicht umfassend Flüssigkristalle umfasst.

5. Verfahren nach einem der vorgehenden Ansprüche,
**dadurch gekennzeichnet,**
**dass** die ersten Flächenbereiche (21, 211 bis 215) in einer konstanten Rasterweite voneinander beabstandet sind, dass jedem der ersten Flächenbereiche (21, 211 bis 215) ein zweiter Flächenbereich (22, 221 bis 225) zugeordnet ist, und dass die zweiten Flächenbereiche (22, 221 bis 225) in einer konstanten Rasterweite voneinander beabstandet und in jeweils gleichartiger Lage zum jeweiligen zugeordneten ersten Flächenbereich auf dem Transferband (10) angeordnet sind.

6. Verfahren nach einem der vorgehenden Ansprüche,
**dadurch gekennzeichnet,**
**dass** die zweiten Flächenbereiche (22, 221 bis 225) eine Abmessung zwischen 5 x 5 mm und 50 x 50 mm, bevorzugt zwischen 10 x 10 mm und 20 x 20 mm besitzen, und/oder dass die ersten und die zweiten Flächenbereiche (21, 22, 211 bis 225) sich nicht überlappen und jeder erste Flächenbereich (21, 211 bis 215) von jedem zweiten Flächenbereich (22, 221 bis 225) bevorzugt zumindest 0,5 mm, insbesondere zumindest 1 mm voneinander beabstandet ist.

7. Verfahren nach einem der Ansprüche 1 bis 5,
**dadurch gekennzeichnet,**
**dass** die ersten und zweiten Flächenbereiche (214, 215, 224, 225) überlappend und/oder ineinander geschachtelt angeordnet sind, wobei insbesondere die ersten Flächenbereiche zumindest bereichsweise einen Rahmen für die zweiten Flächenbereiche bilden, und die zweiten Flächenbereiche ganz oder teilweise innerhalb des Rahmens angeordnet sind.

8. Verfahren nach einem der vorgehenden Ansprüche,
**dadurch gekennzeichnet,**
**dass** sich die Dekorlage (13) in den ersten Flächenbereichen (21, 211 bis 215) einerseits und den zweiten Flächenbereichen (22, 221 bis 225) andererseits unterscheidet, insbesondere eine unterschiedliche Abfolge von Schichten und/oder unterschiedliche Schichten aufweist.

9. Verfahren nach einem der vorgehenden Ansprüche,
**dadurch gekennzeichnet,**
**dass** beim Transferieren das Transferband (10) mittels eines Prägewerkzeugs (30) gegen die zu dekorierende Oberfläche (19) gepresst wird, welches eine erste erhabene Prägefläche (31, 311 bis 315) aufweist, deren Formgebung der Formgebung des Dekorelements (25, 251 bis 255) entspricht, und eine zweite erhabene Prägefläche (32, 221 bis 225) aufweist, deren Formgebung der Formgebung des zweiten Flächenbereichs (22, 221 bis 225) entspricht, und dass das Transferband (10) vor dem Transferieren mittels einer Registrierungsvorrichtung derart in Bezug auf das Prägewerkzeug (30) ausgerichtet wird, dass die erste Prägefläche (31, 311 bis 315) im Bereich eines ersten Flächenbereichs (21, 211 bis 215) auf das Transferband (30) auftrifft und die zweite Prägefläche (32, 321 bis 323) im Bereich eines zweiten Flächenbereichs (22, 221 bis 225) auf das Transferband (30) auftrifft.

10. Verfahren nach einem der vorgehenden Ansprüche,
**dadurch gekennzeichnet,**
**dass** die individualisierbaren Schichten eine vollflächige Metallschicht umfassen.

11. Verfahren nach einem der vorgehenden Ansprüche,
**dadurch gekennzeichnet,**
**dass** a) in dem ersten Flächenbereich eine Reliefstruktur in der Replizierschicht der Dekorlage abgeformt ist, welche filigran strukturierte optische Effekte generiert, beispielsweise filigrane Motive, Logos oder alphanumerische Zeichen generiert und/oder dass in dem zweiten Flächenbereich eine Reliefstruktur in der Replizierlackschicht abgeformt ist, welche grob strukturierte optische Effekte generiert, insbesondere kontinuierliche Farbverläufe oder einen flächigen Farbwechsel generiert, und/oder
**dass** b) die Dekorlage in den zweiten Flächenbereichen eine Replizierschicht aufweist, in deren Oberfläche in jedem zweiten Flächenbereich mindestens bereichsweise in ein oder mehreren ersten Teilbereichen eine erste Reliefstruktur und in ein oder mehreren zweiten Teilbereichen eine zweite Reliefstruktur abgeformt ist, welche sich in zumindest einem Strukturparameter von der ersten Reliefstruktur unterscheidet und dass die individualisierbaren Schichten des jeweiligen zweiten Flächenbereichs sowohl in den ersten Teilbereichen als auch in den zweiten Teilbereichen individualisiert werden, insbesondere zur Bereitstellung einer individualisierten maschinenlesbaren optischen Markierung, welche einen ersten Teil umfasst, der bei ersten Beleuchtungsbedingungen auslesbar ist und in den ein oder mehreren ersten Teilbereichen generiert wird, und einem zweiten Teil, der bei zweiten, von den ersten Beleuchtungsbedingungen unterschiedlichen Beleuchtungsbedingungen auslesbar ist und von den ein oder mehreren zweiten Teilbereichen generiert wird, und/oder
**dass** c) die Dekorlage in den ersten Flächenbereichen und in den zweiten Flächenbereichen eine Replizierschicht aufweist, in deren Oberfläche zumindest bereichsweise eine Reliefstruktur abgeformt ist, dass in dem Bereich, in welchem jeweils ein erster und ein zweiter Flächenbereich einander angrenzen, eine Ruhezone ausgebildet ist, in der keine Reliefstruktur, eine Mattstruktur oder eine Mottenaugenstruktur in die Replizierschicht abgeformt ist und/oder in der ein oder mehrere der in der Dekorschicht vorgesehenen Reflexionsschichten vollständig oder zu einem überwiegenden Teil nicht vorgesehen oder entfernt sind, wobei die Ruhezonen bevorzugt eine Breite zwischen 0,1 mm und 5 mm , weiter bevorzugt zwischen 0,1 mm und 2 mm aufweist.

12. Verfahren nach einem der vorgehenden Ansprüche,
**dadurch gekennzeichnet,**
**dass** auf die der Ablöseschicht (12) entgegengesetzte Oberfläche der Dekorlage (13) eine Kleberschicht (14) vollflächig zumindest in den ersten Flächenbereichen (21, 211 bis 215), vorzugsweise zumindest in den ersten und zweiten Flächenbereichen, insbesondere mittels Siebdruck oder Tiefdruck aufgebracht wird, dass beim Transferieren das Transferband (10) in einem ersten Flächenbereich (21, 211 bis 215) mittels eines der Formgebung des Dekorelements (25, 251 bis 255) entsprechenden Prägewerkzeugs (30) gegen die zu dekorierende Oberfläche (19) gepresst wird, dass das Transferband (10) von der zu dekorierenden Oberfläche (19) abgezogen wird und hierbei das Dekorelement (25, 251 bis 255) auf der zu dekorierenden Oberfläche (19) verbleibt und die umgebenden Bereiche der Dekorlage (13) auf dem Transferband (10) verbleiben und beim Abziehen von dem Dekorelement (25, 251 bis 255) getrennt werden.

## Claims

1. Method for decorating surfaces (19), in particular for decorating outer packaging, wherein the method comprises the following steps:
providing a transfer tape (10) comprising a tape-shaped carrier film (11) and a decorative sheet (13), wherein the decorative sheet (13) has a plurality of homogeneous, optically variable decorative elements (25, 251 to 255) which are arranged in first surface regions (21, 211 to 215) that are separated from one another and spaced apart from one another in the longitudinal direction of the transfer tape, and wherein the decorative sheet (13) has second surface regions (22, 221 to 225) that are separated from one another and spaced apart from one another in the longitudinal direction of the transfer tape, in which the decorative sheet (13) has one or more individualisable layers for providing respectively different machine-readable optical markings (26, 261 to 265),
respectively transferring a first surface region (21, 211 to 215) or a portion of a first surface region (21, 211 to 215) and a second surface region (22, 221 to 225) or a portion of a second surface region (22, 221 to 225) of the decorative sheet (13) onto a surface to be decorated (19), wherein the one or more individualisable layers of the respective second surface region (22, 221 to 225) are individualised before or during the transfer, such that, in addition to one of the optically variable decorative elements (25, 251 to 255), an individualised machine-readable optical marking (26, 261 to 265) is transferred from the transfer tape (10) onto the surface (19) to be decorated,
**characterised in that**
the transfer tape comprises a release layer (12) arranged between the decorative sheet (13) and the carrier film (11), the surface of the decorative sheet (13) opposite the release layer (12) is provided with an adhesive layer over the entire surface in the second surface regions (22, 222), a pattern-like deactivation layer is applied to the adhesive layer in the second surface region (22, 222) for the individualisation, wherein the shaping of the deactivation layer corresponds to the shaping of the individualised machine-readable optical marking (25, 252) in negative form, when transferring, the transfer tape (30) is pressed against the surface (19) to be decorated in the second surface region (22, 222) by means of a stamping tool, during removal, in the portions in which the pattern-like deactivation layer is not arranged between the adhesive layer and the surface (19) to be decorated, the individualisable layers remain on the surface (19) to be decorated, and in the remaining portions of the second surface regions (22, 222), in which the deactivation layer is not provided, the individualisable layers remain on the transfer tape and, during removal, are separated from the portions on the surface (19) to be decorated.

2. Method for decorating surfaces (19), in particular for decorating outer packaging, wherein the method comprises the following steps:
providing a transfer tape (10) comprising a tape-shaped carrier film (11) and a decorative sheet (13), wherein the decorative sheet (13) has a plurality of homogeneous, optically variable decorative elements (25, 251 to 255), which are arranged in first surface regions (21, 211 to 215) that are separated from one another and spaced apart from one another in the longitudinal direction of the transfer tape, and wherein the decorative sheet (13) has second surfaces regions (22, 221 to 225) that are separated from one another and spaced apart from one another in the longitudinal direction of the transfer tape, in which the decorative sheet (13) has one or more individualisable layers for providing respectively different machine-readable optical markings (26, 261 to 265),
respectively transferring a first region (21, 211 to 215) or a portion of a first surface region (21, 211 to 215) and a second surface region (22, 221 to 225) or a portion of a second surface region (22, 221 to 225) of the decorative sheet (13) onto a surface (19) to be decorated, wherein the one or more individualisable layers of the respective second surface region (22, 221 to 225) are individualised before or during the transfer, such that, in addition to one of the optically variable decorative elements (25, 251 to 255), an individualised machine-readable optical marking (26, 261 to 265) is transferred from the transfer tape (10) onto the surface (19) to be decorated,
**characterised in that**
the transfer tape comprises a release layer (12) arranged between the decorative sheet (13) and the carrier film (11), the surface of the decorative sheet (13) which is opposite the release layer is provided in the second surface region (22) with an adhesive layer over the entire surface which can be activated or deactivated by radiation, the adhesive layer, pattern-like in the second surface region (22), is irradiated in the shape of a pattern for individualisation by a radiation source which is suitable for the activation or deactivation of the adhesive layer, wherein the shaping of the irradiated portions corresponds to the shaping of the individualised machine-readable optical marking or the shaping of the individualised machine-readable marking in negative form, when transferring, the transfer tape (30) is pressed against the surface to be decorated in the second surface region (22) by means of an stamping tool, in the portions in which the adhesive layer is activated or not deactivated, the individualisable layers remain on the surface (19) to be decorated during removal and, in the remaining portions of the second surface region (22), the individualisable layers remain on the transfer tape (10) and are separated from the portions remaining on the surface to be decorated during removal.

3. Method according to one of the preceding claims,
**characterised in that**
the one or more individualisable layers are individualised to form a one-dimensional bar code and/or a two-dimensional bar code as an individualised machine-readable optical marking (26, 261 to 265).

4. Method according to one of the preceding claims,
**characterised in that**
the decorative sheet (13) in the first surface regions (21, 211 to 215) and/or in the second surface regions respectively comprises one or more optically active layers, which show different pieces of image information and/or different colours as a result of interference and/or diffraction of the incident light, depending on the angle of incidence of the incident light and/or the angle of viewing, and/or the decorative sheet in the first surface regions (21, 211 to 215) and/or the second surface regions respectively has a replication layer having a relief structure which is at least regionally impressed in a surface of the replication layer, in particular comprising a diffractive relief structure, a relief structure of a hologram, a macrostructure and/or a lens structure, a volume hologram layer having a volume hologram, a thin film layer system and/or a layer comprising cholesteric liquid crystals, and/or each of the optically variable decorative elements (26, 261 to 265) contain a hidden piece of information which can be made visible by means of a verification element, and/ or the decorative sheet (13) in the second surface region (22, 221 to 225) respectively has a coloured lacquer layer, a metallic reflection layer, a replication layer having an impressed relief structure, a volume hologram layer, a thin film layer system and/or a layer comprising liquid crystals.

5. Method according to one of the preceding claims,
**characterised in that**
the first surface regions (21, 211 to 215) are spaced apart from one another at a constant grid width, a second surface region (22, 221 to 225) is assigned to each of the first surface regions (21, 211 to 215), and the second surface regions (22, 221 to 225) are spaced apart from one another at a constant grid width and are arranged on the transfer tape (10) in a respectively homogeneous position relative to the respective assigned first surface region.

6. Method according to one of the preceding claims,
**characterised in that**
the second surface regions (22, 221 to 225) have a dimension of between 5 x 5 mm and 50 x 50 mm, preferably between 10 x 10 mm and 20 x 20 mm, and/or the first and the second surface regions (21, 22, 211 to 255) do not overlap, and each first surface region (21, 211 to 225) is spaced apart from each second surface region (22, 221 to 225) preferably by at least 0.5 mm, in particular by at least 1 mm.

7. Method according to one of claims 1 to 5,
**characterised in that**
the first and second surface regions (214, 215, 224, 225) are arranged in an overlapping and/or nested manner, wherein in particular the first surface regions form a frame for the second surface regions, at least regionally, and the second surface regions are arranged fully or partially within the frame.

8. Method according to one of the preceding claims,
**characterised in that**
the decorative sheet (13) differs in the first surface regions (21, 211 to 215) on one side and in the second surface regions (22, 221 to 225) on the other side, in particular it has a different sequence of layers and/or different layers.

9. Method according to one of the preceding claims,
**characterised in that**,
when transferring, the transfer tape (10) is pressed against the surface (19) to be decorated by means of an stamping tool (30), which has a first raised stamping surface (31, 311 to 315), the shaping thereof corresponding to the shaping of the decorative element (25, 251 to 255), and a second raised stamping surface (32, 211 to 225), the shaping thereof corresponding to the shaping of the second surface region (22, 221 to 225), and the transfer tape (20) is orientated with respect to the stamping tool (30) before the transfer by means of a registration device in such a way that the first stamping surface (31, 311 to 315) impinges on the transfer tape (30) in the region of a first surface region (21, 211 to 215) and the second stamping surface (32, 321 to 323) impinges on the transfer tape (30) in the region of a second surface region (22, 221 to 225).

10. Method according to one of the preceding claims,
**characterised in that**
the individualisable layers comprise a metal layer over the entire surface.

11. Method according to one of the preceding claims,
**characterised in that**
a) in the first surface region, a relief structure is impressed in the replication layer of the decorative sheet which generates filigree structured optical effects, for example filigree motifs, logos or alphanumerical signs and/or in the second surface region, a relief structure is impressed in the replication lacquer layer, which generates coarsely structured optical effects, in particular continuous colour gradients or a surface colour change, and/or
b) the decorative sheet in the second surface regions has a replication layer, in the surface of which in each second surface region a first relief structure is at least regionally impressed in one or more first portions, and a second relief structure is impressed in one or more second portions, said second relief structure differing from the first relief structure in terms of at least one structural parameter, and the individualisable layers of the respective second surface region are individualised both in the first portions and in the second portions, in particular for providing an individualised machine-readable optical marking, which comprises a first part which is readable under first lighting conditions and in which one or more first portions are generated, and a second part which is readable under second lighting conditions which differ from the first lighting conditions, and from which one or several second portions are generated, and/or
c) the decorative sheet has a replication layer in the first surface regions and in the second surface regions, a relief structure being impressed at least regionally in the surface of said replication layer, a rest zone is formed in the region in which a first and a second surface region abut each other respectively, in which no relief structure, a matt structure or a moth-eye structure is impressed in the replication layer and/or in which one or more of the reflection layers provided in the decorative sheet are completely or for the most part not provided or removed, wherein the rest zones preferably have a width of between 0.1 and 5 mm, further preferably between 0.1 mm and 2 mm.

12. Method according to one of the preceding claims,
**characterised in that**,
an adhesive layer (14) is applied over the entire surface at least in the first surface regions (21, 211 to 215) on the surface of the decorative sheet (13) opposite the release layer (12), preferably at least in the first and second surface regions, in particular by means of screen printing or intaglio printing/gravure, when transferring, the transfer tape (10) is pressed against the surface (19) to be decorated in a first surface region (21, 211 to 215) by means of an stamping tool (30) that corresponds to the shaping of the decorative element (25, 251 to 255), the transfer tape (10) is removed from the surface (19) to be decorated and the decorative element (25, 251 to 255) thereby remains on the surface (19) to be decorated and the surrounding regions of the decorative sheet (13) remain on the transfer tape (10) and are separated from the decorative element (25, 251 to 255) during removal.

## Revendications

1. Procédé de décoration de faces supérieures (19), en particulier de décoration d'emballages, dans lequel le procédé comprend les étapes suivantes :
la fourniture d'une bande de transfert (10) comprenant un film de support (11) en forme de bande et une strate décorative (13), dans lequel la strate décorative (13) présente une pluralité d'éléments décoratifs (25, 251 à 255) similaires à variation optique, lesquels sont disposés dans des premières zones de surface (21, 211 à 215) séparées les unes des autres et espacées les unes des autres dans le sens de la longueur de la bande de transfert, et dans lequel la strate décorative (13) présente des deuxièmes zones de surface (22, 221 à 225) séparées les unes des autres et espacées les unes des autres dans le sens de la longueur de la bande de transfert, dans lesquelles la strate décorative (13) présente une ou plusieurs couches pouvant être personnalisées pour fournir des marquages (26, 261 à 265) optiques respectivement différents pouvant être lus par une machine,
le transfert respectivement d'une première zone de surface (21, 211 à 215) ou d'une zone partielle d'une première zone de surface (21, 211 à 215) ainsi que d'une deuxième zone de surface (22, 221 à 225) ou d'une zone partielle d'une deuxième zone de surface (22, 221 à 225) de la strate décorative (13) sur une face supérieure (19) à décorer, dans lequel les une ou plusieurs couches pouvant être personnalisées de la deuxième zone de surface (22, 221 à 225) respective sont personnalisées avant ou pendant le transfert de sorte qu'outre un des éléments décoratifs (25, 251 à 255) à variation optique, un marquage (26, 261 à 265) optique personnalisé pouvant être lu par une machine soit transféré de la bande de transfert (10) sur la face supérieure (19) à décorer,
**caractérisé en ce que**
la bande de transfert comprend une couche de décollement (12) disposée entre la strate décorative (13) et le film de support (11), que
la face supérieure, opposée à la couche de décollement (12), de la strate décorative (13) est pourvue, dans la deuxième zone de surface (22, 222), sur toute la surface d'une couche de colle, qu'aux fins de la personnalisation, une couche de désactivation en forme de motif est appliquée sur la couche de colle dans la deuxième zone de surface (22, 222), dans lequel la forme donnée à la couche de désactivation correspond à la forme donnée au marquage (25, 252) optique personnalisé pouvant être lu par une machine dans la forme négative, que lors du transfert la bande de transfert (30) est pressée, dans la deuxième zone de surface (22, 222), au moyen d'un outil d'estampage, contre la face supérieure (19) à décorer, que dans les zones partielles, dans lesquelles la couche de désactivation en forme de motif n'est pas disposée entre la couche de colle et la face supérieure (19) à décorer, les couches pouvant être personnalisées demeurent lors du retrait sur la face supérieure (19) à décorer et dans les zones partielles restantes de la deuxième zone de surface (22, 222), dans lesquelles la couche de désactivation est prévue, les couches pouvant être personnalisées demeurent sur la bande de transfert et sont séparées, lors du retrait, des zones partielles demeurant sur la face supérieure (19) à décorer.

2. Procédé de décoration de faces supérieures (19), en particulier de décoration d'emballages, dans lequel le procédé comprend les étapes suivantes :
la fourniture d'une bande de transfert (10) comprenant un film de support (11) en forme de bande et une strate décorative (13), dans lequel la strate décorative (13) présente une pluralité d'éléments décoratifs (25, 251 à 255) similaires à variation optique, qui sont disposés dans des premières zones de surface (21, 211 à 215) séparées les unes des autres et espacées les unes des autres dans le sens de la longueur de la bande de transfert et dans lequel la strate décorative (13) présente des deuxièmes zones de surface (22, 221 à 225) séparées les unes des autres et espacées les unes des autres dans le sens de la longueur de la bande de transfert, dans lesquelles la strate décorative (13) présente une ou plusieurs couches pouvant être personnalisées pour fournir des marquages (26, 261 à 265) optiques différents pouvant être lus par une machine,
le transfert respectivement d'une première zone de surface (21, 211 à 215) ou d'une zone partielle d'une première zone de surface (21, 211 à 215) ainsi que d'une deuxième zone de surface (22, 221 à 225) ou d'une zone partielle d'une deuxième zone de surface (22, 221 à 225) de la strate décorative (13) sur une face supérieure (19) à décorer, dans lequel les une ou plusieurs couches pouvant être personnalisées de la deuxième zone de surface (22, 221 à 225) respective sont personnalisées avant ou pendant le transfert de sorte qu'outre un des éléments décoratifs (25, 251 à 255) à variation optique, un marquage (26, 261 à 265) optique personnalisé pouvant être lu par une machine soit transféré de la bande de transfert (10) sur la face supérieure (19) à décorer,
**caractérisé en ce que**
la bande de transfert comprend une couche de décollement (12) disposée entre la strate décorative (13) et le film de support (11), que
la face supérieure, opposée à la couche de décollement, de la strate décorative (13) est pourvue, dans la deuxième zone de surface (22), sur toute la surface, d'une couche de colle pouvant être activée par des rayons ou pouvant être désactivée par des rayons, qu'aux fins de la personnalisation, la couche de colle dans la deuxième zone de surface (22) est exposée au rayonnement présentant une forme de motif d'une source de rayons convenant à l'activation ou à la désactivation de la couche de colle, dans lequel la forme donnée aux zones partielles exposées au rayonnement correspond à la forme donnée au marquage optique personnalisé pouvant être lu par une machine ou à la forme donnée au marquage optique personnalisé pouvant être lu par une machine dans une forme négative, que lors du transfert, la bande de transfert (30) est pressée, dans la deuxième zone de surface (22), au moyen d'un outil d'estampage, contre la face supérieure à décorer, que dans les zones partielles, dans lesquelles la couche de colle est activée ou n'est pas désactivée, les couches pouvant être personnalisées demeurent lors du retrait sur la face supérieure (19) à décorer et dans les zones partielles restantes de la deuxième zone de surface (22), les couches pouvant être personnalisées demeurent sur la bande de transfert (10) et sont séparées lors du retrait des zones partielles demeurant sur la face supérieure à décorer.

3. Procédé selon l'une quelconque des revendications précédentes,
**caractérisé en ce**
**que** les une ou plusieurs couches pouvant être personnalisées sont personnalisées pour réaliser un code à barres monodimensionnel et/ou un code à barres bidimensionnel en tant que marquage (26, 261 à 265) optique personnalisé pouvant être lu par une machine.

4. Procédé selon l'une quelconque des revendications précédentes,
**caractérisé en ce**
**que** la strate décorative (13) dans les premières zones de surface (21, 211 à 215) et/ou dans les deuxièmes zones de surface comprend respectivement une ou plusieurs couches optiquement actives, qui affichent des informations d'image différentes et/ou des couleurs différentes du fait de l'interférence et/ou de la diffraction de la lumière incidente en fonction de l'angle d'incidence de la lumière incidente et/ou de la direction d'observation, et/ou
**que** la strate décorative dans les premières zones de surface (21, 211 à 215) et/ou dans les deuxièmes zones de surface présente respectivement une couche de réplication avec une structure en relief surmoulée au moins par endroits dans une face supérieure de la couche de réplication, en particulier comprenant une structure en relief diffractive, une structure en relief d'un hologramme, une macrostructure et/ou une structure lenticulaire, une couche d'hologramme en volume avec un hologramme en volume, un système de couches à film mince et/ou une couche comprenant des cristaux liquides cholestériques, et/ou que chacun des éléments décoratifs (26, 261 à 265) à variation optique contient une information dissimulée, qui peut être rendue visible au moyen d'un élément de vérification, et/ou que la strate décorative (13) dans les deuxièmes zones de surface (22, 221 à 225) comprend respectivement une couche de vernis colorée, une couche réfléchissante métallique, une couche de réplication avec une structure en relief surmoulée, une couche d'hologramme en volume, un système de couches à film mince, et/ou une couche comprenant des cristaux liquides.

5. Procédé selon l'une quelconque des revendications précédentes,
**caractérisé en ce**
**que** les premières zones de surface (21, 211 à 215) sont espacées les unes des autres à une largeur de trame constante, qu'une deuxième zone de surface (22, 221 à 225) est associée à chacune des premières zones de surface (21, 211 à 215), et que les deuxièmes zones de surface (22, 221 à 225) sont espacées les unes des autres à une largeur de trame constante et sont disposées dans une position respectivement similaire sur la bande de transfert (10) par rapport à la première zone de surface associée respective.

6. Procédé selon l'une quelconque des revendications précédentes,
**caractérisé en ce**
**que** les deuxièmes zones de surface (22, 221 à 225) possèdent une dimension entre 5 x 5 mm et 50 x 50 mm, de manière préférée entre 10 x 10 mm et 20 x 20 mm, et/ou que les premières et les deuxièmes zones de surface (21, 22, 211 à 225) ne se chevauchent pas et chaque première zone de surface (21, 211 à 215) est espacée de chaque deuxième zone de surface (22, 221 à 225) de manière préférée d'au moins 0,5 mm, en particulier d'au moins 1 mm.

7. Procédé selon l'une quelconque des revendications 1 à 5,
**caractérisé en ce**
**que** les premières et deuxièmes zones de surface (214, 215, 224, 225) sont disposées de manière à se chevaucher et/ou de manière emboîtée les unes dans les autres, dans lequel en particulier les premières zones de surface forment au moins par endroits un cadre pour les deuxièmes zones de surface, et les deuxièmes zones de surface sont disposées en totalité ou en partie à l'intérieur du cadre.

8. Procédé selon l'une quelconque des revendications précédentes,
**caractérisé en ce**
**que** la strate décorative (13) diffère dans les premières zones de surface (21, 211 à 215) d'une part et dans les deuxièmes zones de surface (22, 221 à 225) d'autre part, en particulier présente une succession différente de couches et/ou des couches différentes.

9. Procédé selon l'une quelconque des revendications précédentes,
**caractérisé en ce**
**que** lors du transfert, la bande de transfert (10) est pressée au moyen d'un outil d'estampage (30) contre la face supérieure (19) à décorer, laquelle présente une première surface d'estampage (31, 311 à 315) surélevée, dont la forme donnée correspond à la forme donnée à l'élément décoratif (25, 251 à 255), et présente une deuxième surface d'estampage (32, 221 à 225) surélevée, dont la forme donnée correspond à la forme donnée à la deuxième zone de surface (22, 221 à 225), et que la bande de transfert (10) est orientée de telle manière par rapport à l'outil d'estampage (30) avant le transfert au moyen d'un dispositif d'enregistrement que la première surface d'estampage (31, 311 à 315) rencontre la bande de transfert (30) dans la zone d'une première zone de surface (21, 211 à 215) et la deuxième surface d'estampage (32, 321 à 323) rencontre la bande de transfert (30) dans la zone d'une deuxième zone de surface (22, 221 à 225).

10. Procédé selon l'une quelconque des revendications précédentes,
**caractérisé en ce**
**que** les couches pouvant être personnalisées comprennent une couche de métal sur toute la surface.

11. Procédé selon l'une quelconque des revendications précédentes,
**caractérisé en ce**
**que** a) dans la première zone de surface, une structure en relief est surmoulée dans la couche de réplication de la strate décorative, laquelle génère des effets optiques structurés en filigrane, par exemple génère des motifs en filigrane, des logos ou des caractères alphanumériques, et/ou que dans la deuxième zone de surface, une structure en relief est surmoulée dans la couche de vernis de réplication, laquelle génère des effets optiques à structure grossière, en particulier génère des dégradés de couleurs continus ou un changement de couleur en surface, et/ou
**que** b) la strate décorative présente dans les deuxièmes zones de surface une couche de réplication, dans la face supérieure de laquelle une première structure en relief est surmoulée dans chaque deuxième zone de surface au moins par endroits dans une ou plusieurs premières zones partielles et une deuxième structure en relief est surmoulée dans une ou plusieurs deuxièmes zones partielles, laquelle se distingue en au moins un paramètre de structure de la première structure en relief, et que les couches pouvant être personnalisées de la deuxième zone de surface respective sont personnalisées à la fois dans les premières zones partielles et dans les deuxièmes zones partielles, en particulier pour fournir un marquage optique personnalisé pouvant être lu par une machine, lequel comprend une première partie, qui peut être lue en présence de premières conditions d'éclairage et est générée dans les une ou plusieurs premières zones partielles, et une deuxième partie, qui peut être lue en présence de deuxièmes conditions d'éclairage différentes des premières conditions d'éclairage et est générée par les une ou plusieurs deuxièmes zones partielles, et/ou
**que** c) la strate décorative présente dans les premières zones de surface et dans les deuxièmes zones de surface une couche de réplication, dans la face supérieure de laquelle une structure en relief est surmoulée au moins par endroits, que dans la zone, dans laquelle se jouxtent respectivement une première et une deuxième zone de surface, une zone de repos est réalisée, dans laquelle aucune structure en relief n'est surmoulée, mais une structure matte ou une structure en forme d'oeil de mite dans la couche de réplication et/ou dans laquelle une ou plusieurs des couches réfléchissantes prévues dans la couche décorative ne sont pas prévues ou sont éliminées en totalité ou en très grande partie, dans lequel les zones de repos présentent de manière préférée une largeur entre 0,1 mm et 5 mm, de manière davantage préférée entre 0,1 mm et 2 mm.

12. Procédé selon l'une quelconque des revendications précédentes,
**caractérisé en ce**
**que** sur la face supérieure, opposée à la couche de décollement (12), de la strate décorative (13), une couche de colle (14) est appliquée sur toute la surface au moins dans les premières zones de surface (21, 211 à 215), de préférence au moins dans les premières et deuxièmes zones de surface, en particulier au moyen d'une sérigraphie ou d'une héliogravure, que lors du transfert, la bande de transfert (10) est pressée dans une première zone de surface (21, 211 à 215) au moyen d'un outil d'estampage (30) correspondant à la forme donnée à l'élément décoratif (25, 251 à 255), contre la face supérieure (19) à décorer, que la bande de transfert (10) est retirée de la face supérieure (19) à décorer et dans ce cadre l'élément décoratif (25, 251 à 255) demeure sur la face supérieure (19) à décorer et les zones environnantes de la strate décorative (13) demeurent sur la bande de transfert (10) et sont séparées lors du retrait de l'élément décoratif (25, 251 à 255).
